(19) Europäisches Patentamt
European Patent Office
Office européen des brevets

(11) **EP 4 746 079 A1**

(12) **EUROPEAN PATENT APPLICATION**
published in accordance with Art. 153(4) EPC

(43) Date of publication:
**20.05.2026 Bulletin 2026/21**

(21) Application number: **25801135.2**

(22) Date of filing: **20.08.2025**

(51) International Patent Classification (IPC):
**H01M 4/64** $^{(2006.01)}$        **H01M 4/66** $^{(2006.01)}$
**C25D 1/04** $^{(2006.01)}$        **C25D 7/06** $^{(2006.01)}$
**H01M 10/058** $^{(2010.01)}$      **H01M 10/00** $^{(2006.01)}$

(52) Cooperative Patent Classification (CPC):
Y02E 60/10

(86) International application number:
**PCT/CN2025/115989**

(87) International publication number:
**WO 2026/041071 (26.02.2026 Gazette 2026/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.08.2024 CN 202411154807**

(71) Applicant: **Contemporary Amperex Technology
Co., Limited
Ningde, Fujian 352100 (CN)**

(72) Inventors:
• **WU, Jiacheng
  Ningde, Fujian 352100 (CN)**

• **LI, Shisong
  Ningde, Fujian 352100 (CN)**
• **ZHENG, Tuo
  Ningde, Fujian 352100 (CN)**
• **LI, Diwu
  Ningde, Fujian 352100 (CN)**
• **WANG, Xiaoli
  Ningde, Fujian 352100 (CN)**
• **QU, Jiangjiang
  Ningde, Fujian 352100 (CN)**

(74) Representative: **Lorenz Seidler Gossel Part. mbB
Widenmayerstr. 23
80538 München (DE)**

(54) **SECONDARY BATTERY AND PREPARATION METHOD THEREFOR, AND ELECTRIC DEVICE**

(57) The present application provides a secondary battery and a preparation method therefor, and an electric device. The secondary battery includes a copper foil, the copper foil includes copper grains with different particle sizes, and the copper grains include copper grains with a particle size of less than or equal to 0.5 $\mu$m and copper grains with a particle size of greater than 0.5 $\mu$m, where a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%.

FIG. 7

**Description**

CROSS-REFERENCE

The present application refers to Chinese Patent Application No. 202411154807.0 filed on August 21, 2024, and entitled "SECONDARY BATTERY AND PREPARATION METHOD THEREFOR, AND ELECTRIC DEVICE", which is incorporated herein by reference in its entirety.

TECHNICAL FIELD

The present application relates to the technical field of secondary batteries, and in particular, to a secondary battery and a preparation method therefor, and an electric device.

BACKGROUND

As secondary batteries have been widely used in energy storage power systems such as hydropower, thermal power, wind power, and solar power stations, as well as in various fields such as electric tools, electric bicycles, electric motorcycles, electric vehicles, military equipment, and aerospace, there are increasingly higher demands for the energy density of the secondary batteries in the market.

A silicon-based negative electrode active material can be used or the amount of a secondary battery active material can be increased to improve the energy density, but the silicon-based material has a high thermal expansion coefficient, and when a silicon-based battery is heated, the volume thereof expands seriously; the volume of a cell is also increased correspondingly after the amount of the secondary battery active material is increased, which puts forward higher requirements for the performance of a negative electrode current collector. A copper foil of the negative electrode current collector is an important part of the secondary battery, and can restrain the expansion of the cell, thereby preventing the anode of the secondary battery from breaking during use, and having a great impact on the electrical performance and safety performance of the secondary battery.

Therefore, there is an urgent need for a secondary battery with an improved performance of the negative electrode current collector.

SUMMARY

The present application provides a secondary battery. The secondary battery has a negative electrode current collector with an improved tensile performance, which can effectively restrain the problem of cell expansion, delay or reduce the breakage of electrode plates, and prolong the service life of the secondary battery.

In a first aspect, the present application provides a secondary battery. The secondary battery includes a negative electrode plate, the negative electrode plate includes a negative electrode current collector and a negative electrode film layer disposed on at least one side surface of the negative electrode current collector, the negative electrode current collector includes a copper foil, the copper foil includes copper grains with different particle sizes, and the copper grains include copper grains with a particle size of less than or equal to 0.5 $\mu$m and copper grains with a particle size of greater than 0.5 $\mu$m, where a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%.

The copper foil according to the present application has excellent tensile strength and elongation at break, and has excellent plasticity while improving mechanical strength, thereby providing a material foundation for improving the energy density, capacity, and safety of the secondary battery.

In any embodiment, an expansion force of the secondary battery is greater than or equal to 1000 kgf, the secondary battery includes a negative electrode plate, the negative electrode plate includes a negative electrode current collector and a negative electrode film layer disposed on at least one side surface of the negative electrode current collector, the negative electrode current collector includes a copper foil, the copper foil includes copper grains with different particle sizes, the copper grains include copper grains with a particle size of less than or equal to 0.5 $\mu$m and copper grains with a particle size of greater than 0.5 $\mu$m, where a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%.

During charging and discharging cycle operation of the secondary battery, active ions are intercalated/deintercalated, resulting in volume expansion of the electrode plate, especially in a self-generated negative electrode battery or a novel silicon-based or metallic lithium negative electrode, and the overall expansion of the secondary battery is high due to the combined influence of designing high group margin or large-sized cells for the pursuit of improving the energy density of the single cell. However, the copper foil current collector of the high expansion secondary battery is significantly stretched and squeezed under stress during operation, which increases the probability of breakage or cracking of the copper foil current collector, and deteriorates the safety and service life of the battery cell. Therefore, the copper foil including the above copper grains with different particle sizes is used in the secondary battery according to the present application, and the copper foil has excellent tensile strength and elongation at break, and has excellent plasticity while improving the mechanical strength, thereby reducing the probability of breakage or cracking of the copper foil current collector in a high expansion system, which is conducive to improving the service life of the secondary battery when the electrode plate cracks or fails in operation, and further improving the safety and service life of the secondary battery.

In any embodiment, a thickness expansion rate of the secondary battery is 4% to 10%.

In any embodiment, the secondary battery is a wound secondary battery, and an expansion force of the secondary battery is greater than or equal to 1000 kgf. The wound secondary battery includes a negative electrode plate, and the negative electrode plate includes a negative electrode current collector and a negative electrode film layer disposed on at least one side surface of the negative electrode current collector. The negative electrode current collector includes a copper foil, the copper foil includes copper grains with different particle sizes, and the copper grains include copper grains with a particle size of less than or equal to 0.5 $\mu$m and copper grains with a particle size of greater than 0.5 $\mu$m, where a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%.

The current collector of the negative electrode plate in the wound secondary battery is prone to crack-induced breakage in a turning region, because the current collector is prone to being damaged irreversibly when the cell is pressurized to set after being wound. As a result, the probability of cracking or breakage of an outer ring turning region and an inner ring bending region of the negative electrode plate after being subjected to an expansion stress caused by factors such as an increase in the internal pressure and volume expansion of the secondary battery is greatly increased, which exacerbates the risk of the cell failing and deteriorates the service life and safety of the secondary battery. In the wound secondary battery according to the present application, the copper foil including the above copper grains with different particle sizes is used, and the tensile strength and elongation at break of the copper foil are significantly improved, such that the copper foil has excellent mechanical properties and plasticity, thereby reducing the probability of cracking or breakage of the copper foil after being subjected to the expansion stress, and reducing the probability of crack-induced breakage of the electrode plate of the wound cell, which is beneficial to improving the service life of the secondary battery when the electrode plate cracks or fails in operation, thereby further improving the safety and service life of the secondary battery.

In any embodiment, a thickness expansion rate of the wound secondary battery is 4% to 10%.

In any embodiment, the secondary battery includes a negative electrode plate, and the negative electrode plate includes a negative electrode current collector and a negative electrode film layer disposed on at least one side surface of the negative electrode current collector. The negative electrode current collector includes a copper foil, the copper foil includes copper grains with different particle sizes, and the copper grains include copper grains with a particle size of less than or equal to 0.5 $\mu$m and copper grains with a particle size of greater than 0.5 $\mu$m, where a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%; and specific capacity of a negative electrode active material in the negative electrode film layer is 800 mAh/g to 1500 mAh/g.

Increasing the amount of the active material is one of the effective means to improve the energy density or capacity of the secondary battery, but this will lead to an increase in the volume of the cell. The applicant found that the use of a high-specific-capacity negative electrode active material can significantly improve available lithium intercalation capacity of the negative electrode active material, thereby improving the energy density or capacity of the secondary battery while reducing the impact on the volume of the cell. However, the high-specific-capacity negative electrode active material has relatively large particle volume expansion before and after intercalation/deintercalation of lithium ions, and the expansion stress acts on the copper foil of the current collector, which increases the probability of breakage or cracking of the copper foil in a thickness direction after being subjected to the expansion stress, and deteriorates the safety and service life of the secondary battery. In the secondary battery according to the present application, the copper foil including the above copper grains with different particle sizes is used, and the copper foil has excellent tensile strength and elongation at break, and has excellent plasticity while improving the mechanical strength, thereby improving the safety of the secondary battery while improving the energy density and capacity of the secondary battery.

In any embodiment, specific capacity of the negative electrode active material in the negative electrode film layer is 800 mAh/g to 1500 mAh/g.

The copper foil according to the present application is suitable for secondary batteries including the negative electrode active material with the specific capacity of 800 mAh/g to 1500 mAh/g. More active ions can be intercalated in the high-specific-capacity negative electrode material, such as a silicon-based negative electrode and an alkali metal negative electrode, and these materials typically exhibit high expandability, which increases the probability of breakage or cracking of the copper foil in the cell. However, the copper foil has both excellent mechanical properties and plasticity, which can reduce the risk of breakage or cracking of the copper foil in a high energy density battery system or a high expansion system battery, thereby being capable of improving the energy density, capacity, and safety of the secondary battery.

In any embodiment, a particle size range of the copper grains with the particle size of greater than 0.5 μm is greater than 0.5 μm and less than or equal to 3 μm, which can adjust or optimize the tensile strength of the copper foil.

In any embodiment, based on a total number of the copper grains, the number proportion of the copper grains with the particle size of greater than 0.5 μm and less than or equal to 3 μm is 5% to 30%.

As described above, the copper grains with the particle size of greater than 0.5 μm and less than or equal to 3 μm can help to reduce an average grain of the copper foil, which further improves the mechanical strength of the copper foil. Further controlling the number proportion of the copper grains with the particle size of greater than 0.5 μm and less than or equal to 3 μm to be 5% to 30% can make the copper foil have good elongation at break and both excellent mechanical properties and plasticity, which can reduce the risk of breakage or cracking of the copper foil in the high energy density battery system or the high expansion system battery, thereby improving both the energy density and safety of the secondary battery.

In any embodiment, at least a part of the copper grains with the particle size of greater than 0.5 μm are arranged with a short diameter thereof in the thickness direction of the current collector.

At least a part of the copper grains with the particle size of greater than 0.5 μm are arranged with the short diameter thereof in the thickness direction of the current collector, which indicates that the tortuosity degree of grain boundaries inside the copper foil is high, and the energy required for inducing breakage caused by passing through the grain boundaries (i.e., the thickness direction of the current collector) of the copper foil is greater, which helps to reduce the probability of the breakage of the copper foil in the thickness direction, thereby improving the brittleness of the current collector while further reducing the risk of breakage or cracking of the copper foil, and improving the safety of the secondary battery.

In any embodiment, the number proportion of the copper grains with the particle size of less than or equal to 0.5 μm in the total number of the copper grains is 80% to 95%, which helps to further improve the tensile strength, thereby improving the mechanical strength of the copper foil.

In any embodiment, the number proportion of the copper grains with the particle size of greater than 0.5 μm in the total number of the copper grains is 5% to 20%, which helps to further improve the elongation at break, thereby improving the plasticity of the copper foil.

In any embodiment, the copper foil satisfies at least one of the following conditions:

  (1) an average particle size of the copper grains is 0.3 μm to 1.2 μm;
  (2) a maximum particle size of the copper grains is 1 μm to 2.5 μm;
  (3) a minimum particle size of the copper grains is 0.1 μm to 0.3 μm; and
  (4) a particle size span of the copper grains is 0.8 μm to 2.5 μm.

The particle size distribution of the copper grains helps to adjust the number proportions of the copper grains with the particle size of less than or equal to 0.5 μm and the copper grains with the particle size of greater than 0.5 μm, thereby adjusting and improving the tensile strength and elongation at break of the copper foil, such that the copper foil has both excellent mechanical properties and plastic properties.

In any embodiment, the copper foil satisfies at least one of the following conditions:

  (1) an average particle size of the copper grains is 0.3 μm to 0.6 μm;
  (2) a maximum particle size of the copper grains is 1.2 μm to 2.0 μm;
  (3) a minimum particle size of the copper grains is 0.1 μm to 0.3 μm; and
  (4) a particle size span of the copper grains is 1 μm to 2 μm.

The particle size distribution of the copper grains helps to further adjust the tensile strength and elongation at break of the copper foil, thereby improving the mechanical properties and plastic properties.

In any embodiment, the tensile strength of the copper foil is 600 MPa to 1000 MPa, and/or the elongation at break of the copper foil is 4% to 8% under test conditions of room temperature (20±10 °C), a sample length × width of (50±0.25 mm) × (15±0.25 mm), and a tensile speed of 50±0.5 mm/min.

The copper foil has excellent tensile strength and elongation at break, and has good mechanical properties and plastic properties. Therefore, the copper foil can be applied to the high energy density battery or the high expansion battery, and helps to improve the safety of the secondary battery.

In any embodiment, the tensile strength of the copper foil is 700 MPa to 1000 MPa, and/or the elongation at break of the copper foil is 4% to 7% when the copper foil is under test conditions of room temperature ($20\pm10$ °C), a sample length $\times$ width of ($50\pm0.25$ mm) $\times$ ($15\pm0.25$ mm), and a tensile speed of $50\pm0.5$ mm/min.

In any embodiment, the tensile strength of the copper foil is 700 MPa to 800 MPa, and/or the elongation at break of the copper foil is 5% to 6% when the copper foil is under test conditions of room temperature ($20\pm10$ °C), a sample length $\times$ width of ($50\pm0.25$ mm) $\times$ ($15\pm0.25$ mm), and a tensile speed of $50\pm0.5$ mm/min.

The copper foil has good tensile strength, and thus can meet a practical requirement for a high-strength copper foil in the battery field to a certain extent. In addition, the copper foil also has excellent elongation at break and exhibits good plasticity, which helps to reduce brittle defects of the copper foil and reduce the risk of breakage or slight cracking of the copper foil in the cell.

In any embodiment, hardness of the copper foil is 55 HV to 65 HV. In any embodiment, hardness of the copper foil is 55 HV to 60 HV. Proper hardness is beneficial to surface treatment of the copper foil and cold pressing treatment of the secondary battery, thereby reducing the surface damage of the copper foil and reducing the influence on the bonding performance of the negative electrode film layer and the copper foil.

In any embodiment, a thickness of the copper foil is 4 $\mu$m to 10 $\mu$m. The thickness of the copper foil can be reduced without affecting the strength, thereby facilitating lightweight design of the battery and further improving the energy density or the specific capacity.

In any embodiment, the secondary battery further includes a negative electrode film layer located on at least one side of the copper foil, and a negative electrode active material in the negative electrode film layer includes at least one of artificial graphite, natural graphite, soft carbon, hard carbon, a silicon-based material, a tin-based material, lithium titanate, and metallic lithium. The secondary battery can be applied to a variety of different battery negative electrode systems, and has a wide range of applications.

In any embodiment, the negative electrode active material includes a silicon-based material, and the silicon-based material includes at least one of elemental silicon, a silicon-oxygen compound, a silicon-carbon composite, a silicon-nitrogen composite, and a silicon alloy. The secondary battery using the silicon-based material as the negative electrode active material has higher energy density, and meanwhile, the copper foil in the secondary battery can well restrain the volume expansion of the negative electrode during a battery cycle.

In any embodiment, based on total mass of the negative electrode film layer, a mass proportion of the silicon-based material is 5% to 100%, optionally 10% to 60%, and more optionally 10% to 30%.

In any embodiment, a mass proportion of a silicon element in the silicon-based material is 20% to 50%.

In any embodiment, based on total mass of the negative electrode film layer, a mass proportion of a silicon element is 4% to 10%.

In any embodiment, an expansion force of the secondary battery is greater than or equal to 1000 kgf.

In any embodiment, an expansion force of the secondary battery is greater than or equal to 2500 kgf.

In any embodiment, an expansion force of the secondary battery is greater than or equal to 4000 kgf.

In any embodiment, an expansion force of the secondary battery is 1000 kgf to 10,000 kgf.

A current collector in the prior art is prone to breakage under a high expansion force of the secondary battery, which causes safety accidents and limits the further improvement of electrochemical performances of the secondary battery. The current collector according to the embodiments of the present application has both excellent tensile strength and elongation at break, and thus can be applied to a secondary battery with a high expansion force, which is beneficial to further improving the energy density of the secondary battery.

In any embodiment, a thickness expansion rate of the secondary battery is 4% to 10%.

The current collector in the prior art is prone to breakage under the expansion stress caused by the volume change of the secondary battery, leading to a plummet in the performance of the secondary battery, and easily triggering safety accidents, which limits the further improvement of the performance of the secondary battery. The current collector according to the embodiments of the present application has good strength performances, and thus can be applied to a secondary battery with a high thickness expansion rate, which is beneficial to further improving the energy density and safety of the secondary battery.

A second aspect of the present application provides a preparation method for a secondary battery, including preparing a copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms.

Compared with a calendering method, the electroplating method has a mature and simple process and has a low requirement for equipment. The prepared copper foil has excellent tensile strength and elongation at break, and has both excellent mechanical strength and good plasticity.

In any embodiment, the preparation method for the secondary battery includes preparing an electrode plate by using a copper foil as a current collector, and preparation of the copper foil includes preparing the copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms; and an expansion force of the secondary battery is greater than or equal to 1000 kgf.

In the preparation method for the secondary battery according to the present application, the copper foil is prepared by using the above electroplating method, and the copper foil with excellent tensile strength and elongation at break is obtained. The copper foil has excellent plasticity while improving the mechanical strength, thereby reducing the probability of breakage or cracking of the copper foil when being subjected to an expansion force of the secondary battery due to multiple factors such as the volume expansion of the electrode plate in the secondary battery and increased internal pressure caused by decomposition and gas generation of an electrolytic solution and/or a stress during thickness expansion, which is conducive to further improving the safety and service life of the secondary battery.

In any embodiment, the preparation method for the secondary battery includes preparing a wound secondary battery and preparing an electrode plate by using a copper foil as a current collector, and preparation of the copper foil includes preparing the copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms; and an expansion force of the secondary battery is greater than or equal to 1000 kgf.

In the preparation method for the secondary battery according to the present application, the copper foil is prepared by using the above electroplating method, and the copper foil with excellent tensile strength and elongation at break is obtained. The copper foil has excellent plasticity while improving the mechanical strength, thereby reducing the probability of cracking or breakage of the copper foil when being subjected to an expansion stress after the secondary battery is wound and pressurized to set, and reducing the probability of crack-induced breakage of the electrode plate of the wound cell, so that the safety and service life of the secondary battery are further improved.

In any embodiment, the preparation method includes using a copper foil as a current collector to prepare an electrode plate, and preparation of the copper foil includes preparing the copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms; and specific capacity of a negative electrode active material in a negative electrode film layer of the secondary battery is 800 mAh/g to 1500 mAh/g.

In the preparation method for the secondary battery according to the present application, the copper foil is prepared by using the above electroplating method, and the copper foil with excellent tensile strength and elongation at break is obtained. The copper foil has excellent plasticity while improving the mechanical strength, thereby reducing the probability of breakage or cracking of the copper foil when being subjected to an expansion stress caused by the change in the particle volume of the high-specific-capacity negative electrode active material before and after intercalation/deintercalation of lithium ions, which is conducive to further improving the safety and service life of the secondary battery.

In any embodiment, the electroplating method satisfies one or more of the following conditions:

(1) the peak value of the pulse current is 40,000 A to 80,000 A;
(2) the valley value of the pulse current is 1000 A to 10,000 A;
(3) the change period of the pulse current is 500 ms to 5000 ms;
(4) a distance between a cathode electrode and an anode electrode is 8 mm to 20 mm;
(5) a temperature of electroplating deposition is 45 °C to 60 °C; and
(6) a rolling speed of a cathode roller is 2 m/min to 5 m/min.

In any embodiment, the electroplating method satisfies one or more of the following conditions:

(1) the peak value of the pulse current is 50,000 A to 70,000 A;
(2) the valley value of the pulse current is 2000 A to 5500 A;
(3) the change period of the pulse current is 2000 ms to 4000 ms;
(4) a distance between a cathode electrode and an anode electrode is 8 mm to 12mm;
(5) a temperature of electroplating deposition is 50 °C to 60 °C; and
(6) a rolling speed of a cathode roller is 2 m/min to 3 m/min.

Compared with direct current deposition, applying the pulse current to the electroplating solution can enable the copper ions to be reduced and deposited to form fine grains with a relatively small particle size under a high current condition, and form grains (for example, columnar crystals) with a relatively large particle size under a low current condition. The formation and growth of crystal nuclei of the copper ions can be adjusted by adjusting the magnitude and the change period of the current, so as to adjust the size and morphology of the grain size, adjust number proportions of copper grains with a particle size of less than or equal to 0.5 μm and copper grains with a particle size of greater than 0.5 μm, and improve the tensile strength and elongation at break of the copper foil.

In any embodiment, the pulse current includes one or more of a square wave pulse current, a sinusoidal wave pulse current, a triangular wave pulse current, and a sawtooth wave pulse current. In any embodiment, the pulse current includes a sinusoidal wave pulse current. The sinusoidal wave pulse current changes continuously and periodically, which is beneficial to the continuous and variable growth of the grains.

In any embodiment, the electroplating solution includes a leveling agent, a wetting agent, and a brightener, where the leveling agent includes one or more of collagen and saccharin sodium; the wetting agent includes one or more of hydroxyethyl cellulose and polyethylene glycol; and the brightener includes bis-(sodium sulfopropyl)-disulfide.

The leveling agent can improve the flatness of the copper foil. The wetting agent can improve the wettability of the electroplating solution and a substrate, thereby improving a nucleation rate of the copper foil, and reducing an average particle size of the grains in the copper foil. The brightener can make a grain size of the copper foil smaller, and reduce surface roughness of the copper foil, thereby improving surface smoothness.

In any embodiment, the electroplating solution includes collagen with a concentration of 60 mg/L to 300 mg/L, saccharin sodium with a concentration of 0.5 g/L to 10 g/L, polyethylene glycol with a concentration of 50 mg/L to 200 mg/L, hydroxyethyl cellulose with a concentration of 30 mg/L to 200 mg/L, bis-(sodium sulfopropyl)-disulfide with a concentration of 500 mg/L to 2000 mg/L, and chloride ions with a concentration of 20 mg/L to 80 mg/L (calculated as chlorine atoms).

In any embodiment, the electroplating solution includes: the electroplating solution includes: collagen with a concentration of 80 mg/L to 150 mg/L, saccharin sodium with a concentration of 0.5 g/L to 4 g/L, polyethylene glycol with a concentration of 60 mg/L to 150 mg/L, hydroxyethyl cellulose with a concentration of 50 mg/L to 150 mg/L, bis-(sodium sulfopropyl)-disulfide with a concentration of 500 mg/L to 1000 mg/L, and chloride ions with a concentration of 40 mg/L to 80 mg/L.

The collagen and the saccharin sodium in the electroplating solution help to improve pits and protrusions on a surface of the copper foil, thereby improving the flatness of the copper foil. The hydroxyethyl cellulose and the polyethylene glycol help to reduce the difference in the thickness direction of the copper foil, thereby improving the uniformity of the copper foil. The bis-(sodium sulfopropyl)-disulfide can improve an electrochemical reduction rate of the copper ions and adjust the particle size of the grains, so that the prepared copper foil is bright and flat, the number proportions of the copper grains with the particle size of less than or equal to 0.5 μm and the copper grains with the particle size of greater than 0.5 μm are appropriate, and the copper foil has good tensile strength and elongation at break.

In any embodiment, a pH value of the electroplating solution is 2.5 to 4.5, so as to facilitate the reduction of the copper ions.

A third aspect of the present application provides an electrode plate. The electrode plate includes the copper foil in the secondary battery according to the first aspect of the present application or the copper foil prepared according to the preparation method in the second aspect of the present application.

In any embodiment, the electrode plate further includes a negative electrode film layer located on at least one side of the copper foil, and a negative electrode active material in the negative electrode film layer includes at least one of artificial graphite, natural graphite, soft carbon, hard carbon, a silicon-based material, a tin-based material, lithium titanate, and metallic lithium.

In any embodiment, the negative electrode active material includes a silicon-based material, and the silicon-based material includes at least one of elemental silicon, a silicon-oxygen compound, a silicon-carbon composite, a silicon-nitrogen composite, and a silicon alloy.

In any embodiment, based on total mass of the negative electrode film layer, a mass proportion of the silicon-based material is 5% to 100%, optionally 10% to 60%, and more optionally 10% to 30%.

In any embodiment, a mass proportion of a silicon element in the silicon-based material is 20% to 50%.

In any embodiment, based on total mass of the negative electrode film layer, a mass proportion of a silicon element is 4% to 10%.

A fourth aspect of the present application provides a wound secondary battery, including the secondary battery according to the first aspect of the present application or the secondary battery prepared according to the preparation method in the second aspect of the present application, or including the electrode plate according to the third aspect of the present application.

A fifth aspect of the present application provides an electric device, including the secondary battery according to the first aspect of the present application or the secondary battery prepared according to the method in the second aspect of the present application or the wound secondary battery according to the fourth aspect of the present application.

BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.

FIG. 1 is a schematic diagram of a secondary battery according to one embodiment of the present application.
FIG. 2 is an exploded view of the secondary battery according to one embodiment of the present application shown in FIG. 1.
FIG. 3 is a schematic diagram of a battery module according to one embodiment of the present application.
FIG. 4 is a schematic diagram of a battery pack according to one embodiment of the present application.
FIG. 5 is an exploded view of the battery pack according to one embodiment of the present application shown in FIG. 4.
FIG. 6 is a schematic diagram of an electric device using a secondary battery as a power source according to one embodiment of the present application.
FIG. 7 shows an inverse pole figure map of a cross section of a copper foil in Example 1 of the present application after electron backscatter diffraction (EBSD) testing.
FIG. 8 shows a tensile curve of the copper foil in Example 1 of the present application.
FIG. 9 shows a particle size distribution graph of the cross section of the copper foil in Example 1 of the present application obtained by EBSD testing.
FIG. 10 shows an inverse pole figure map of a cross section of a copper foil in Example 2 of the present application after EBSD testing.
FIG. 11 shows a tensile curve of the copper foil in Example 2 of the present application.
FIG. 12 shows a particle size distribution graph of the cross section of the copper foil in Example 2 of the present application obtained by EBSD testing.
FIG. 13 shows an inverse pole figure map of a cross section of a copper foil in Example 3 of the present application after EBSD testing.
FIG. 14 shows a tensile curve of the copper foil in Example 3 of the present application.
FIG. 15 shows a particle size distribution graph of the cross section of the copper foil in Example 3 of the present application obtained by EBSD testing.
FIG. 16 shows a tensile curve of the copper foil in Example 3 of the present application.
FIG. 17 shows an inverse pole figure map of a cross section of a copper foil in Comparative Example 2 of the present application after EBSD testing.
FIG. 18 shows a tensile curve of the copper foil in Comparative Example 2 of the present application.
FIG. 19 shows a particle size distribution graph of the cross section of the copper foil in Comparative Example 2 of the present application obtained by EBSD testing.

Description of the reference numerals:

1: battery pack; 2: upper case body; 3: lower case body; 4: battery module; 5: secondary battery; 51: housing; 52: electrode assembly; 53: cover plate; T: thickness direction.

DETAILED DESCRIPTION

Hereinafter, embodiments specifically disclosing a secondary battery and a preparation method therefor, an electrode plate, a wound secondary battery, and an electric device in the present application will be described in detail below with appropriate reference to the accompanying drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" indicates an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Typically, the secondary battery includes a positive electrode plate, a negative electrode plate, an electrolyte, and a separator. In the charging and discharging process of the battery, active ions (such as lithium ions or sodium ions) are intercalated and deintercalated back and forth between the positive electrode plate and the negative electrode plate. The electrolyte conducts the active ions between the positive electrode plate and the negative electrode plate. The separator is disposed between the positive electrode plate and the negative electrode plate to primarily prevent positive and negative electrodes from short-circuiting, while allowing the passage of active ions. The negative electrode plate includes a negative electrode current collector, which is configured to carry an electrode active material and collect an output current, and can also restrain the cell expansion to prevent an anode from breaking in a cycle process.

Increasing the amount of the active material can improve the energy density or capacity of the secondary battery, but will lead to an increase in the volume of the cell. The use of a silicon-based negative electrode material, high-capacity graphite, metallic lithium, and other negative electrode materials can also improve the energy density or capacity of the secondary battery. However, the above materials have high expandability, which leads to serious volume expansion and contraction of the electrode plate in the cycle process. This easily causes a copper foil in the cell to break or slightly crack, consequently causing a short circuit of the battery, and seriously affecting the safety of the secondary battery. In particular, the design of a square-shell wound battery has higher requirements for the anti-bending performance of the current collector since the cell is pressurized to set after being wound. The current collector will be irreversibly damaged when the cell is pressurized to set. For cases such as using thinned current collector substrates, high areal density active material coatings, or designs with extreme group margin, the risk of the cell cracking is greatly increased, which further exacerbates the risk of the cell failing. At present, the tensile strength of the conventionally used copper foil of the negative electrode current collector is usually 200 MPa to 500 MPa, which cannot meet the usage requirements of a new generation of secondary batteries for high energy density or high capacity. Refining copper grains can enhance the strength of the material, but can exacerbate brittle defects of the copper foil, consequently increasing the risk of the copper foil breaking or slightly cracking. How to improve the strength of the copper foil while ensuring good plasticity is an urgent problem to be solved at present.

[Secondary Battery]

Based on this, the present application provides a secondary battery. The secondary battery includes a negative electrode plate, the negative electrode plate includes a negative electrode current collector and a negative electrode film layer disposed on at least one side surface of the negative electrode current collector, the negative electrode current collector includes a copper foil, the copper foil includes copper grains with different particle sizes, and the copper grains include copper grains with a particle size of less than or equal to 0.5 μm and copper grains with a particle size of greater than 0.5 μm, where the number proportion of the copper grains with the particle size of less than or equal to 0.5 μm in the total number of the copper grains is 70% to 95%, and the number proportion of the copper grains with the particle size of greater than 0.5 μm in the total number of the copper grains is 5% to 30%.

The copper grains with the particle size of 0.5 μm or more tend to appear as columnar grains or columnar-like grains, which are also referred to as "large grains" herein. The copper grains with the particle size of less than or equal to 0.5 μm are fine grains in a nearly granular shape, and a fine grain region is formed around the columnar grains. Therefore, the copper foil substrate in the present application has a grain morphology characterized by a predominance of the fine grains with a mixed distribution of the large grains, and has a heterogeneous grain morphology with a small amount of the large grains doped in the fine grains. The main reason for this heterogeneous morphology difference of the large and small grains lies in the adjustment of the grain size in a foil generating process. Specifically, as an embodiment, the grain size may be controlled by adjusting the amplitude change of the current in the foil generating process of the copper foil. After the current is reduced, grains with a relatively large size tend to be formed, and after the current is increased, grains with a relatively small size tend to be formed.

The copper grains with the particle size of less than or equal to 0.5 $\mu$m help to improve the tensile strength of the copper foil and improve the mechanical properties. The particle size of the copper grains with the particle size of greater than 0.5 $\mu$m helps to improve the elongation at break and improve the plasticity of the copper foil. Number proportions of the copper grains with the particle size of less than or equal to 0.5 $\mu$m and the copper grains with the particle size of greater than 0.5 $\mu$m in the copper grains may affect the mechanical properties and the plasticity of the copper foil to different degrees, such that the copper foil exhibits overall mechanical properties and plasticity of varying degrees of excellence. In the copper foil according to the present application, the tensile strength of the copper foil can be significantly improved when the number proportion of the copper grains with the particle size of less than or equal to 0.5 $\mu$m in the total number of the copper grains is 70% to 95%. Meanwhile, the copper foil can have good elongation at break when the number proportion of the copper grains with the particle size of greater than 0.5 $\mu$m in the total number of the copper grains is 5% to 30%, providing a material foundation for improving the energy density and safety of the secondary battery.

In some embodiments, the expansion force of the secondary battery is greater than or equal to 1000 kgf, the secondary battery includes a negative electrode plate, the negative electrode plate includes a negative electrode current collector and a negative electrode film layer disposed on at least one side surface of the negative electrode current collector, the negative electrode current collector includes a copper foil, the copper foil includes copper grains with different particle sizes, the copper grains include copper grains with a particle size of less than or equal to 0.5 $\mu$m and copper grains with a particle size of greater than 0.5 $\mu$m, where the number proportion of the copper grains with the particle size of less than or equal to 0.5 $\mu$m in the total number of the copper grains is 70% to 95%, and the number proportion of the copper grains with the particle size of greater than 0.5 $\mu$m in the total number of the copper grains is 5% to 30%.

During charging and discharging cycle operation of the secondary battery, active ions are intercalated/deintercalated, resulting in volume expansion of the electrode plate, especially in a self-generated negative electrode battery or a novel silicon-based or metallic lithium negative electrode, and the overall expansion of the secondary battery is high due to the combined influence of designing high group margin or large-sized cells for the pursuit of improving the energy density of the single cell. However, the copper foil current collector of the high expansion secondary battery is significantly stretched and squeezed under stress during operation, which increases the probability of breakage or cracking of the copper foil current collector, and deteriorates the safety and service life of the battery cell. Therefore, the copper foil including the above copper grains with different particle sizes is used in the secondary battery according to the present application, and the copper foil has excellent tensile strength and elongation at break, and has excellent plasticity while improving the mechanical strength, thereby reducing the probability of breakage or cracking of the copper foil current collector in a high expansion system, which is conducive to improving the service life of the secondary battery when the electrode plate cracks or fails in operation, and further improving the safety and service life of the secondary battery.

In some embodiments, the thickness expansion rate of the secondary battery is 4% to 10%.

In some embodiments, the secondary battery is a wound secondary battery, and the expansion force of the secondary battery is greater than or equal to 1000 kgf. The wound secondary battery includes a negative electrode plate, and the negative electrode plate includes a negative electrode current collector and a negative electrode film layer disposed on at least one side surface of the negative electrode current collector. The negative electrode current collector includes a copper foil, the copper foil includes copper grains with different particle sizes, and the copper grains include copper grains with a particle size of less than or equal to 0.5 $\mu$m and copper grains with a particle size of greater than 0.5 $\mu$m, where the number proportion of the copper grains with the particle size of less than or equal to 0.5 $\mu$m in the total number of the copper grains is 70% to 95%, and the number proportion of the copper grains with the particle size of greater than 0.5 $\mu$m in the total number of the copper grains is 5% to 30%.

The current collector of the negative electrode plate in the wound secondary battery is prone to crack-induced breakage in a turning region, because the current collector is prone to being damaged irreversibly when the cell is pressurized to set after being wound. As a result, the probability of cracking or breakage of an outer ring turning region and an inner ring bending region of the negative electrode plate after being subjected to an expansion stress caused by factors such as an increase in the internal pressure and volume expansion of the secondary battery is greatly increased, which exacerbates the risk of the cell failing and deteriorates the service life and safety of the secondary battery. In the wound secondary battery according to the present application, the copper foil including the above copper grains with different particle sizes is used, and the tensile strength and elongation at break of the copper foil are significantly improved, such that the copper foil has excellent mechanical properties and plasticity, thereby reducing the probability of cracking or breakage of the copper foil after being subjected to the expansion stress, and reducing the probability of crack-induced breakage of the electrode plate of the wound cell, which is beneficial to improving the service life of the secondary battery when the electrode plate cracks or fails in operation, thereby further improving the safety and service life of the secondary battery.

In some embodiments, the thickness expansion rate of the wound secondary battery is 4% to 10%. Increasing the amount of the active material is one of the effective means to improve the energy density or capacity of the secondary battery, but this will lead to an increase in the volume of the cell. The applicant found that the use of a high-specific-capacity negative electrode active material can significantly improve available lithium intercalation capacity of the negative electrode active material, thereby improving the energy density or capacity of the secondary battery while reducing the impact on the volume of the cell. However, the high-specific-capacity negative electrode active material has relatively large particle volume expansion before and after intercalation/deintercalation of lithium ions, and the expansion stress acts on the copper foil of the current collector, which increases the probability of breakage or cracking of the copper foil in a thickness direction after being subjected to the expansion stress, and deteriorates the safety and service life of the secondary battery.

Based on this, another embodiment of the present application provides a secondary battery, the secondary battery includes a negative electrode plate, and the negative electrode plate includes a negative electrode current collector and a negative electrode film layer disposed on at least one side surface of the negative electrode current collector. The negative electrode current collector includes a copper foil, the copper foil includes copper grains with different particle sizes, and the copper grains include copper grains with a particle size of less than or equal to 0.5 $\mu$m and copper grains with a particle size of greater than 0.5 $\mu$m, where the number proportion of the copper grains with the particle size of less than or equal to 0.5 $\mu$m in the total number of the copper grains is 70% to 95%, and the number proportion of the copper grains with the particle size of greater than 0.5 $\mu$m in the total number of the copper grains is 5% to 30%; and the specific capacity of a negative electrode active material in the negative electrode film layer is 800 mAh/g to 1500 mAh/g.

In the secondary battery according to the present application, the copper foil including the above copper grains with different particle sizes is used. The copper foil has excellent tensile strength and elongation at break, has excellent plasticity while improving the mechanical strength, and is well matched with the high-specific-capacity negative electrode active material, thereby improving the safety and service life of the secondary battery while improving the energy density and capacity of the secondary battery.

In some embodiments, the specific capacity of the negative electrode active material in the negative electrode film layer is 800 mAh/g to 1500 mAh/g.

The copper foil according to the present application is particularly suitable for a system including the negative electrode active material with the specific capacity of 800 mAh/g to 1500 mAh/g. More active ions can be intercalated in the high-specific-capacity negative electrode material, such as a silicon-based negative electrode and an alkali metal negative electrode, and these materials typically exhibit high expandability, which increases the probability of breakage or cracking of the copper foil in the cell. However, the copper foil has both excellent mechanical properties and plasticity, which can reduce the risk of breakage or cracking of the copper foil in a high energy density battery system or a high expansion system battery.

Without being restrained by any theory, there is a large difference in the work hardening capacity between the large grains and the fine grains, and the heterogeneous grain morphology with a small number of the large grains doped in the fine grains makes the strain partitioning more significant at the initial stage of plastic deformation of the copper foil. This may be because the moderate doping of the large grains enables geometrically necessary dislocations (GNDs) in higher density to be generated in a non-uniform plastic deformation process compared with the case where the grains are all fine grains. The non-uniform plastic deformation process of the copper foil may cause bending of crystal planes of the grains, leading to the formation of dislocations, and such dislocations are referred to as the GNDs. The GND can coordinate the plastic strain brought by the deformation and maintain the material continuity, which helps to reduce the occurrence of the concentrated stress in the deformation process of the copper foil, so that the copper foil exhibits a stronger ability to suppress the strain localization, and the plasticity of the copper foil is improved. In addition, in copper foil crystals, contact interfaces between the grains are referred to as grain boundaries. It can be understood that, in the same region, a smaller particle size of the grains indicates a larger total area of the grain boundaries, so that the grain boundary stress needing to be overcome by the copper foil in the deformation process is higher, and deformation resistance of the copper foil is higher, that is, the mechanical strength is higher. At the same time, the GNDs in higher density generated in the deformation process of the copper foil help to reduce the concentrated stress, thereby improving the mechanical strength.

In some embodiments, the number proportion of the copper grains with the particle size of less than or equal to 0.5 $\mu$m in the total number of the copper grains is 75% to 95%, 80% to 95%, 85% to 95%, 83% to 93%, 85% to 93%, or 87% to 93%, which helps to further improve the tensile strength, thereby optimizing the mechanical properties of the copper foil.

In some embodiments, the number proportion of the copper grains with the particle size of less than or equal to 0.5 $\mu$m in the total number of the copper grains is 75%, 78%, 80%, 81%, 82%, 83%, 84%, 85%, 86%, 87%, 88%, 89%, 90%, 91%, 92%, 93%, 94%, 95%, or in a range between any two of the above values or any value within the range.

Herein, the particle size range of the copper grains with the particle size of less than or equal to 0.5 $\mu$m is greater than or equal to 0.1 $\mu$m and less than or equal to 0.5 $\mu$m.

In some embodiments, the number proportion of the copper grains with the particle size of greater than 0.5 $\mu$m in

the total number of the copper grains is 5% to 20%, 2% to 20%, 2% to 15%, 5% to 15%, 5% to 13%, 6% to 12%, or 7% to 10%, which helps to further improve the elongation at break, thereby optimizing the plasticity of the copper foil.

In some embodiments, the number proportion of the copper grains with the particle size of greater than 0.5 $\mu$m in the total number of the copper grains is 5%, 6%, 7%, 8%, 9%, 10%, 11%, 12%, 13%, 14%, 15%, 18%, 20%, 25%, 30%, or in a range between any two of the above values or any value within the range.

Herein, the particle size range of the copper grains with the particle size of greater than 0.5 $\mu$m is greater than 0.5 $\mu$m and less than or equal to 3 $\mu$m, which is beneficial to reducing or optimizing the average particle size of the copper foil, thereby improving the tensile strength of the copper foil.

The number proportion and the particle size of the grains in the copper foil can be tested by a method known in the art. As an example, the cross section of the copper foil is measured by using an electron backscatter diffractometer (EBSD) in combination with a scanning electron microscope to obtain an inverse pole figure map with a magnification of 3000. The number and the particle size of the grains are counted by using imageJ analysis software paired with the Oxford C-Nano+ EBSD, the equivalent circle diameter of the grains is used as the particle size of the grains, the number distribution graph is made, and a skewed distribution is used for fitting to obtain the particle size of the grains and the number proportions of the grains in different particle size intervals.

In some embodiments, based on the total number of the copper grains, the number proportion of the copper grains with the particle size of greater than 0.5 $\mu$m and less than or equal to 3 $\mu$m is 5% to 30%.

As described above, the copper grains with the particle size of greater than 0.5 $\mu$m and less than or equal to 3 $\mu$m can help to reduce an average grain of the copper foil, which further improves the mechanical strength of the copper foil. Further controlling the number proportion of the copper grains with the particle size of greater than 0.5 $\mu$m and less than or equal to 3 $\mu$m to be 5% to 30% can make the copper foil have good elongation at break and both excellent mechanical properties and plasticity, which can reduce the risk of breakage or cracking of the copper foil in the high energy density battery system or the high expansion system battery, thereby improving both the energy density and safety of the secondary battery.

In some embodiments, the specific capacity of the negative electrode active material is optionally 800 mAh/g, 820 mAh/g, 850 mAh/g, 880 mAh/g, 900 mAh/g, 920 mAh/g, 950 mAh/g, 980 mAh/g, 1000 mAh/g, 1020 mAh/g, 1050 mAh/g, 1080 mAh/g, 1100 mAh/g, 1120 mAh/g, 1150 mAh/g, 1180 mAh/g, 1200 mAh/g, 1250 mAh/g, 1300 mAh/g, 1350 mAh/g, 1400 mAh/g, 1450 mAh/g, 1500 mAh/g, or in a range between any two of the above values or any value within the range.

When used herein, the specific capacity of the negative electrode active material can be measured by using instruments and a method known in the art. As an example, the following method can be referred for testing. The negative electrode active material, a conductive agent carbon black, and polyvinylidene fluoride (PVDF) are fully stirred and mixed in an appropriate amount of a solvent N-methyl pyrrolidone (NMP) at a mass ratio of 91.6:1.8:6.6 to form a uniform negative electrode slurry; the surface of the copper foil of the negative electrode current collector is uniformly coated with the negative electrode slurry and dried and cold-pressed; then a metallic lithium foil is used as the counter electrode and a polypropylene (PP) film is used as the separator, and the electrolytic solution is injected, where the formula of the electrolytic solution used is as follows: dimethyl carbonate (DMC), ethyl methyl carbonate (EMC), and ethylene carbonate (EC) are mixed at a weight ratio of 1:1:1 to obtain an organic solvent, and then $LiPF_6$ is dissolved in the above organic solvent to prepare an electrolytic solution with a concentration of 1.0 mol/L. In a glove box under an argon atmosphere, a CR2430 button battery is assembled. At 25 °C, the battery is charged at a rate of 0.1C to an upper limit cut-off voltage of 3.8 V, and then charged at a constant voltage until the current is less than 0.05C; after the battery is allowed to stand for 30 min, the battery is discharged at a rate of 0.1C to a lower limit cut-off voltage of 2.0 V, and initial discharge capacity is denoted as Cm. The specific capacity of the negative electrode active material is calculated as follows: discharge capacity Cm/mass m of the negative electrode active material.

It can be understood that the specific capacity of the negative electrode active material can also be obtained by disassembling the battery to obtain the negative electrode plate, assembling the negative electrode plate into the button battery according to the above method, and then testing the button battery.

In some embodiments, at least a part of the copper grains with the particle size of greater than 0.5 $\mu$m are arranged with a short diameter thereof in the thickness direction of the current collector.

At least a part of the copper grains with the particle size of greater than 0.5 $\mu$m are arranged with the short diameter thereof in the thickness direction of the current collector, which indicates that the tortuosity degree of grain boundaries inside the copper foil is high, and the energy required for inducing breakage caused by passing through the grain boundaries (i.e., the thickness direction of the current collector) of the copper foil is greater, which helps to reduce the probability of the breakage of the copper foil in the thickness direction, thereby improving the brittleness of the current collector while further reducing the risk of breakage or cracking of the copper foil, and improving the safety of the secondary battery.

It can be understood that, for the arrangement direction of the short diameter of at least a part of the copper grains with the particle size of greater than 0.5 $\mu$m, reference may be made to characterization of the short diameter of the copper grains and determination of the arrangement direction thereof performed by using the EBSD and the scanning electron microscope in combination as described above.

In some embodiments, the average particle size of the copper grains is 0.3 $\mu$m to 1.2 $\mu$m. In some embodiments, the average particle size of the copper grains is 0.3 $\mu$m to 0.6 $\mu$m. In some embodiments, the average particle size of the copper grains is 0.3 $\mu$m to 0.5 $\mu$m. In some embodiments, the average particle size of the copper grains is 0.3 $\mu$m, 0.35 $\mu$m, 0.4 $\mu$m, 0.45 $\mu$m, 0.5 $\mu$m, 0.55 $\mu$m, 0.6 $\mu$m, 0.65 $\mu$m, 0.7 $\mu$m, 0.75 $\mu$m, 0.8 $\mu$m, 0.85 $\mu$m, 0.9 $\mu$m, 1.0 $\mu$m, 1.1 $\mu$m, 1.2 $\mu$m, or in a range between any two of the above values or any value within the range.

A proper particle size range is theoretically conducive to obtaining a proper grain boundary of the copper foil, so that the copper foil has proper resistance to the dislocation motion of the grains and deformation resistance, thereby optimizing the mechanical strength of the copper foil.

The average particle size of the grains can be tested by a method known in the art. As an example, the cross section of the copper foil is measured by using an EBSD in combination with a scanning electron microscope to obtain an inverse pole figure map. The number and the particle size of the grains are counted by using imageJ analysis software paired with the Oxford C-Nano+ EBSD, the equivalent circle diameter of the grains is used as the particle size of the grains, the number distribution graph is made, and a skewed distribution is used for fitting to obtain the average particle size of the grains.

In some embodiments, the maximum particle size of the copper grains is 1 $\mu$m to 2.5 $\mu$m. In some embodiments, the maximum particle size of the copper grains is 1.2 $\mu$m to 1.8 $\mu$m or 1.2 $\mu$m to 2.0 $\mu$m. In some embodiments, the maximum particle size of the copper grains is 1 $\mu$m, 1.2 $\mu$m, 1.4 $\mu$m, 1.6 $\mu$m, 1.8 $\mu$m, 2 $\mu$m, or in a range between any two of the above values or any value within the range.

The maximum particle size of the copper grain can be tested by a method known in the art. As an example, the cross section of the copper foil is measured by using an EBSD in combination with a scanning electron microscope to obtain an inverse pole figure map. The number and the particle size of the grains are counted by using imageJ analysis software paired with the Oxford C-Nano+ EBSD, the equivalent circle diameter of the grains is used as the particle size of the grains, the number distribution graph is made, and a skewed distribution is used for fitting. In the statistical results, the particle size of maximum grains is the maximum particle size of the copper grains.

In some embodiments, the minimum particle size of the copper grains is 0.1 $\mu$m to 0.3 $\mu$m. In some embodiments, the minimum particle size of the copper grains is 0.1 $\mu$m to 0.3 $\mu$m. In some embodiments, the minimum particle size of the copper grains is 0.1 $\mu$m, 0.15 $\mu$m, 0.2 $\mu$m, 0.25 $\mu$m, 0.3 $\mu$m, or in a range between any two of the above values or any value within the range.

The minimum particle size of the copper grains can be tested by a method known in the art. As an example, the cross section of the copper foil is measured by using an EBSD in combination with a scanning electron microscope to obtain an inverse pole figure map. The number and the particle size of the grains are counted by using imageJ analysis software paired with the Oxford C-Nano+ EBSD, the equivalent circle diameter of the grains is used as the particle size of the grains, the number distribution graph is made, and a skewed distribution is used for fitting. In the statistical results, the particle size of minimum grains is the minimum particle size of the copper grains.

The particle size span between the maximum particle size and the minimum particle size is the difference value between the maximum particle size and the minimum particle size in the particle size distribution of the grains of the copper foil. In some embodiments, the particle size span of the copper grains is 0.8 $\mu$m to 2.5 $\mu$m. In some embodiments, the particle size span of the copper grains is 0.8 $\mu$m to 2 $\mu$m. In some embodiments, the particle size span of the copper grains is 1 $\mu$m to 2 $\mu$m. In some embodiments, the particle size span of the copper grains is 0.8 $\mu$m, 1 $\mu$m, 1.2 $\mu$m, 1.4 $\mu$m, 1.6 $\mu$m, 1.8 $\mu$m, 2.0 $\mu$m, 2.2 $\mu$m, 2.4 $\mu$m, 2.5 $\mu$m, or in a range between any two of the above values or any value within the range.

When the particle size span of the copper grains is within the range, the dispersion degree of the particle size distribution of the copper grains can be within an appropriate range, which can help to balance the grain boundary area and the GND density of the copper grains, improve resistance to the dislocation motion of the grains, and reduce the occurrence of the concentrated stress in the deformation process of the copper foil. As a result, the copper foil exhibits excellent plasticity while improving the mechanical strength.

In some embodiments, the tensile strength of the copper foil is 600 MPa to 1000 MPa under test conditions of room temperature (20$\pm$10 °C), a sample length $\times$ width of (50$\pm$0.25 mm) $\times$ (15$\pm$0.25 mm), and a tensile speed of 50$\pm$0.5 mm/min. In some embodiments, the tensile strength of the copper foil is 700 MPa to 1000 MPa. In some embodiments, the tensile strength of the copper foil is 700 MPa to 800 MPa.

In some embodiments, the elongation at break of the copper foil is 4% to 8% under test conditions of room temperature (20$\pm$10 °C), a sample length $\times$ width of (50$\pm$0.25 mm) $\times$ (15$\pm$0.25 mm), and a tensile speed of 50$\pm$0.5 mm/min. In some embodiments, the elongation at break of the copper foil is 4% to 7%. In some embodiments, the elongation at break of the copper foil is 5% to 6%.

As used herein, the term "tensile strength" refers to the maximum load bearing strength per unit area of a test sample when the test sample is continuously loaded with a tension until it fractures.

As used herein, the term "elongation at break" refers to the ratio of the length change of a material after being subjected to a force and plastic deformation until it breaks to an original length, and is usually expressed as a percentage, which is an important parameter for measuring the deformation capacity of the material when being subjected to a stress in a stretching process.

In the present application, the tensile strength and the elongation at break of the copper foil can be tested by a method known in the art, and for example, testing is performed according to the GB/T 5230-1995 "electrolytic copper foil" standard. As an example, at least four test samples having a test region length of $50\pm0.25$ mm and a width of $15\pm0.25$ mm are cut and continuously loaded with a tension at room temperature ($20\pm10$ °C) and at a tensile speed of $50\pm0.5$ mm/min until they fracture, and the tensile strength of the test sample is obtained by dividing the maximum load by the cross-sectional area of the test sample. The cross-sectional area of the test sample can be calculated by dividing the mass of the test sample by the product of the length and the density of the test sample. The elongation at break can be calculated according to the displacement method after the above test. The test region refers to the detection area during an instrument test. Considering that the test sample may need to be fixed by a clamp during the test, the length and the width of the test sample may be greater than the length and the width of the test region.

In some embodiments, the tensile strength of the copper foil is 600 MPa, 650 MPa, 700 MPa, 750 MPa, 800 MPa, 850 MPa, 900 MPa, 950 MPa, 1000 MPa, or in a range between any two of the above values or any value within the range under test conditions of room temperature ($20\pm10$ °C), a sample length $\times$ width of ($50\pm0.25$ mm) $\times$ ($15\pm0.25$ mm), and a tensile speed of $50\pm0.5$ mm/min.

In some embodiments, the elongation at break of the copper foil is 4.0%, 4.5%, 5.0%, 5.5%, 6.0%, 6.5%, 7.0%, 7.5%, 8.0%, or in a range between any two of the above values or any value within the range under test conditions of room temperature ($20\pm10$ °C), a sample length $\times$ width of ($50\pm0.25$ mm) $\times$ ($15\pm0.25$ mm), and a tensile speed of $50\pm0.5$ mm/min.

The copper foil having the tensile strength and the elongation at break has excellent mechanical strength and plasticity. Therefore, the copper foil can be applied to the high energy density battery or the high expansion battery, and helps to improve the safety of the secondary battery.

In some embodiments, the hardness of the copper foil is 55 HV to 65 HV In some embodiments, the hardness of the copper foil is 55 HV to 60 HV In some embodiments, the hardness of the copper foil is 55 HV, 56 HV, 57 HV, 58 HV, 59 HV, 60 HV, 61 HV, 62 HV, 63 HV, 64 HV, 65 HV, or in a range between any two of the above values, or any value within the range.

The hardness may reflect compression deformation or puncture resistance of the copper foil. In a preparation process of the secondary battery, the surface quality of the copper foil may affect the bonding performance between the negative electrode film layer and the copper foil. In particular, in a cold pressing treatment step of the secondary battery, particles of the negative electrode active material apply a pressure to the copper foil under an external pressure, and appropriate hardness is beneficial to reducing the surface damage of the copper foil, thereby reducing the influence on the bonding performance between the negative electrode film layer and the copper foil.

In some embodiments, the thickness of the copper foil is 4 $\mu$m to 10 $\mu$m. In some embodiments, the thickness of the copper foil is 3 $\mu$m, 4 $\mu$m, 5 $\mu$m, 6 $\mu$m, 7 $\mu$m, 8 $\mu$m, 9 $\mu$m, 10 $\mu$m, or in a range between any two of the above values or any value within the range.

In the present application, the thickness of the copper foil can be tested by using a method known in the art. As an example, a sample with an area of $20\times15$ cm$^2$ is cut, the cut sample strips are weighed on an electronic balance to obtain the weight of the sample strip, and then the volume of the sample strip is calculated according to the density $\rho$ of 8.96 g/cm$^3$ of the copper foil, and the length and the width of the sample strip are known, so that the thickness of the sample strip can be calculated.

After thinning, the maximum load that the copper foil with ordinary strength can bear decreases sharply, and the thickness of the copper foil that can be used for plastic deformation is severely reduced. As a result, the tensile strength and the elongation at break of the copper foil are greatly reduced, and fatigue fracture is likely to occur in the later period of a cycle of the secondary battery, causing safety accidents. The copper foil according to the present application still has excellent tensile strength and elongation at break within a thickness range of 4 $\mu$m to 10 $\mu$m, and has good mechanical properties and plasticity. The thickness of the copper foil can be reduced without affecting the strength, which facilitates the lightweight design of the battery, facilitates the weight reduction of the battery, and further improves the energy density or specific capacity of the secondary battery.

In some embodiments, the expansion force of the secondary battery is greater than or equal to 1000 kgf.

In some embodiments, the expansion force of the secondary battery is greater than or equal to 2500 kgf.

In some embodiments, the expansion force of the secondary battery is greater than or equal to 4000 kgf.

In some embodiments, the expansion force of the secondary battery is 1000 kgf to 10,000 kgf.

In some embodiments, the expansion force of the secondary battery is 1000 kgf, 1200 kgf, 1500 kgf, 1800 kgf, 2000 kgf, 2200 kgf, 2500 kgf, 2800 kgf, 3000 kgf, 3200 kgf, 3500 kgf, 3800 kgf, 4000 kgf, 4200 kgf, 4500 kgf, 4800 kgf, 5000 kgf, 5500 kgf, 6000 kgf, 6500 kgf, 7000 kgf, 7500 kgf, 8000 kgf, 8500 kgf, 9000 kgf, 9500 kgf, 10,000 kgf, or in a range between any two of the above values or any value within the range.

1 kgf refers to the gravitational force exerted on a 1-kilogram object at sea level at 45 degrees north latitude. 1 kgf is about 9.8 Newtons. The expansion force of a secondary battery cell refers to the expansion force of the secondary battery when the State of Health (SOH) reaches 60% (in a state of charge), and can be sensed by pressure sensors disposed in clamps on both sides of the large surface of the electrode plate of the secondary battery cell. As an example, the test is performed with reference to the following method: At 25 °C, the battery is charged at a constant current of 1C to a voltage of 3.8 V, charged at a constant voltage of 3.8 V until a current of ≤ 0.05C, and then discharged at a constant current of 1C until a voltage of 2.5 V. This is one charging and discharging cycle. Such charging and discharging cycles are repeatedly performed. The SOH of the cell is monitored throughout the process, and when a 90% SOH is reached, the expansion force of the secondary battery at the 90% SOH is measured by the pressure sensors disposed in the clamps on both sides of the large surface of the electrode plate of the secondary battery, and through a simulation with a simulation model, the expansion force of the secondary battery at the 60% SOH is obtained.

A current collector in the prior art is prone to breakage under a high expansion force of the secondary battery, which causes safety accidents and limits the further improvement of electrochemical performances of the secondary battery. The current collector according to the embodiments of the present application has both excellent tensile strength and elongation at break, and thus can be applied to a secondary battery with a high expansion force, which is beneficial to further improving the energy density of the secondary battery.

In some embodiments, the thickness expansion rate of the secondary battery is 4% to 10%.

In the present application, the thickness expansion rate of the secondary battery can be tested by a method known in the art. As an example, the thickness expansion rate = (H1 - H0)/H0, where H0 and H1 are the total thickness of the secondary battery at 100% SOH and the total thickness of the secondary battery at 60% SOH, respectively. As an example, the test can be performed with reference to the following method: At 25 °C, the total thickness H0 of the secondary battery is measured, the battery is charged at a constant current of 1C to a voltage of 3.8 V, and then charged at a constant voltage of 3.8 V to a current ≤ 0.05C, and subsequently the battery is discharged at a constant current of 1C to a voltage of 2.5 V. This is one charging and discharging process. Such charging and discharging cycles are repeatedly performed. In this process, the SOH of the cell is monitored throughout the process, and when the secondary battery reaches 90% SOH, the total thickness H' of the secondary battery at this time is measured. Through a simulation with a simulation model, the total thickness H1 of the secondary battery at 60% SOH is obtained, namely, the thickness expansion rate of the secondary battery can be obtained.

In some embodiments, the thickness expansion rate of the secondary battery is 4%, 5%, 6%, 7%, 8%, 9%, 10%, or in a numerical range between any two of the values.

The current collector in the prior art is prone to breakage under the expansion stress caused by the volume change of the secondary battery, leading to a plummet in the performance of the secondary battery, and easily triggering safety accidents, which limits the further improvement of the performance of the secondary battery. The current collector according to the embodiments of the present application has good strength performances, and thus can be applied to a secondary battery with a high thickness expansion rate, which is beneficial to further improving the energy density and safety of the secondary battery.

The secondary battery according to the present application can be prepared by a method including the following steps: including preparing a copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms.

As used herein, the term "electroplating method" refers to a method of forming a metal layer by depositing a metal or alloy onto the surface of a workpiece by using the principle of electroplating.

As used herein, the term "pulse current" refers to a current or voltage pulse that occurs periodically.

Compared with the calendering method in the prior art, the electroplating method has a mature and simple process, a low requirement for equipment, and low manufacturing costs. The prepared copper foil has excellent tensile strength and elongation at break, and not only has excellent mechanical strength and plasticity, but also helps to reduce the manufacturing costs of the secondary battery.

In some solutions, a high direct current is used to prepare the copper foil by the electroplating method, to improve the mechanical strength of the copper foil. However, due to the minimal difference in work hardening capacity between the grains, the ability to suppress strain localization is reduced. As a result, the copper foil is highly prone to concentrated stress in the deformation process, the plasticity of the copper foil is reduced, and the risk of brittle failure is greatly increased. In the preparation method according to the present application, the pulse current is used, and the crystal nucleus formation and growth rate of the copper grains is adjusted by continuously changing the amplitude of the current, so as to adjust the size and morphology of the copper grain size, adjust the number proportions of copper grains with a particle size of less than or equal to 0.5 μm and copper grains with a particle size of greater than 0.5 μm, and improve the tensile strength and elongation at break of the copper foil, so that the copper foil has excellent mechanical properties and plasticity.

In some embodiments, the preparation method for the secondary battery includes preparing an electrode plate by using the copper foil as a current collector, and the preparation of the copper foil includes preparing the copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms; and the expansion force of the secondary battery is greater than or equal to 1000 kgf.

In the preparation method for the secondary battery according to the present application, the copper foil is prepared by using the above electroplating method, and the copper foil with excellent tensile strength and elongation at break is obtained. The copper foil has excellent plasticity while improving the mechanical strength, thereby reducing the probability of breakage or cracking of the copper foil when being subjected to an expansion force of the secondary battery due to multiple factors such as the volume expansion of the electrode plate in the secondary battery and increased internal pressure caused by decomposition and gas generation of an electrolytic solution and/or a stress during thickness expansion, which is conducive to further improving the safety and service life of the secondary battery.

In some embodiments, the preparation method for the secondary battery includes preparing a wound secondary battery and preparing an electrode plate by using the copper foil as a current collector, and the preparation of the copper foil includes preparing the copper foil by an electroplating method, where the electroplating method includes applying a pulse current to an electroplating solution, so that copper ions in the electroplating solution are reduced and deposited to form the copper foil, a peak value of the pulse current is 40,000 A to 100,000 A, a valley value of the pulse current is 100 A to 20,000 A, and a change period of the current is 50 ms to 5000 ms; and the expansion force of the secondary battery is greater than or equal to 1000 kgf.

In the preparation method for the secondary battery according to the present application, the copper foil is prepared by using the above electroplating method, and the copper foil with excellent tensile strength and elongation at break is obtained. The copper foil has excellent plasticity while improving the mechanical strength, thereby reducing the probability of cracking or breakage of the copper foil when being subjected to an expansion stress after the secondary battery is wound and pressurized to set, and reducing the probability of crack-induced breakage of the electrode plate of the wound cell, so that the safety and service life of the secondary battery are further improved.

In some embodiments, the peak value of the pulse current is 40,000 A to 80,000 A. In some embodiments, the peak value of the pulse current is 50,000 A to 70,000 A. In some embodiments, the peak value of the pulse current is 55,000 A to 70,000 A, 50,000 A to 80,000 A, 55,000 A to 80,000 A, or 50,000 A to 60,000 A.

In some embodiments, the peak value of the pulse current is 45,000 A, 50,000 A, 55,000 A, 60,000 A, 65,000 A, 70,000 A, 75,000 A, 80,000 A, 85,000 A, 90,000 A, 95,000 A, 100,000 A, or in a range between any two of the above values or any value within the range.

In some embodiments, the valley value of the pulse current is 1000 A to 10,000 A. In some embodiments, the valley value of the pulse current is 2000 A to 5500 A. In some embodiments, the valley value of the pulse current is 2500 A to 5000 A, 2000 A to 8000 A, or 2000 A to 5000 A.

In some embodiments, the valley value of the pulse current is 100 A, 500 A, 1000 A, 1500 A, 2000 A, 2500 A, 3500 A, 4000 A, 4500 A, 5000 A, 8000 A, 10,000 A, 15,000 A, 20,000 A, or in a range between any two of the above values or any value within the range.

In some embodiments, the change period of the pulse current is 500 ms to 5000 ms. In some embodiments, the change period of the pulse current is 2000 ms to 4000 ms. In some embodiments, the change period of the pulse current is 50 ms, 100 ms, 200 ms, 500 ms, 1000 ms, 1200 ms, 1500 ms, 1800 ms, 2000 ms, 2500 ms, 2750 ms, 3000 ms, 3500 ms, 4000 ms, 4500 ms, 5000 ms, or in a range between any two of the above values or any value within the range.

Herein, the term "peak value" refers to the maximum current value of the pulse current, typically the value at the peak of the pulse current waveform. Similarly, the term "valley value" refers to the minimum current value of the pulse current, typically the value at the valley of the pulse current waveform.

Herein, the term "change period" refers to the time between two adjacent peaks or valleys in the pulse current waveform, with a unit of ms.

In a deposition process of the copper ions, increasing the current may accelerate the deposition rate of the copper ions, thereby helping to form fine grains with a relatively small particle size. Decreasing the current may reduce the deposition rate of the copper ions, thereby helping to form relatively regular and ordered grains with a relatively large particle size, for example, columnar crystals. Adjusting change parameters of the current, i.e., the peak value, the valley value, and the change period, helps to adjust the formation of the crystal nuclei of the copper grains, the growth rate of the grains, and the deposition time of the copper ions, so as to generate a heterogeneous grain morphology with large and small grains doped and mixed, and adjust the particle size and the number proportion of the grains, thereby improving the tensile strength and the elongation at break of the copper foil, so that the copper foil has both excellent mechanical strength and plasticity.

In some embodiments, the pulse current includes one or more of a square wave pulse current, a sinusoidal wave pulse current, a triangular wave pulse current, and a sawtooth wave pulse current.

In some embodiments, the pulse current includes a sinusoidal wave pulse current. The sinusoidal wave pulse current changes continuously and periodically, which is beneficial to the continuous and variable growth of the grains.

In some embodiments, the preparation method is a continuous production method.

**In** some embodiments, the preparation method is a roller deposition method. The working principle is that the cathode roller is connected to the negative electrode of the power source, and the anode tank is connected to the positive electrode of the power source. After the electroplating solution containing the copper ions enters the anode tank, an electric field is formed between the positive electrode and the negative electrode. Under the action of the electric field, the copper ions migrate to the surface of the cathode roller and deposit, and the deposited copper foil is peeled off from the cathode roller and wound on another roller. The electroplating solution is continuously added and circulated, and the copper ions are continuously deposited on the cathode roller, continuously peeled off, and wound on a winding shaft under the action of the electric field. The preparation method can realize continuous production of the copper foil to a large extent, thereby providing possibility for industrial application.

In some embodiments, the cathode electrode is a titanium roller or a titanium plate.

In some embodiments, the anode electrode is a titanium substrate plate.

In some embodiments, the distance between the cathode electrode and the anode electrode is 8 mm to 20 mm. In some embodiments, the distance between the cathode electrode and the anode electrode is 8 mm to 12mm. In some embodiments, the distance between the cathode electrode and the anode electrode is 8 mm, 9 mm, 10 mm, 11 mm, 12 mm, 13 mm, 14 mm, 15 mm, 16 mm, 17 mm, 18 mm, 19 mm, 20 mm, or in a range between any two of the above values or any value within the range.

In some embodiments, the temperature of electroplating deposition is 45 °C to 60 °C. In some embodiments, the temperature of electroplating deposition is 50 °C to 60 °C. In some embodiments, the temperature of deposition is optionally 45 °C, 50 °C, 55 °C, 60 °C, or in a range between any two of the above values, or any value within the range.

In some embodiments, the rolling speed of the cathode roller is 2 m/min to 5 m/min. In some embodiments, the rolling speed of the cathode roller is 2 m/min to 3 m/min. In some embodiments, the rolling speed of the cathode roller is 2 m/min, 2.5 m/min, 3 m/min, 3.5 m/min, 4 m/min, 4.5 m/min, 5 m/min, or in a range between any two of the above values or any value within the range.

The cathode roller may be any roller in the art suitable for preparing the copper foil, such as a titanium roller.

In some embodiments, the electroplating solution includes a leveling agent, a wetting agent, and a brightener.

As used herein, the term "leveling agent" refers to a substance added to the electroplating solution that can improve the flatness of the plating layer. The substance can adhere to tips of the copper foil where deposition rate is fast, inhibit grain growth, balance the growth rates of pits and the tips, and improve the flatness of the copper foil.

As used herein, the term "wetting agent" refers to a substance used to reduce the interfacial tension between the electroplating solution and the electrode, enabling better adhesion of the plating layer to the substrate. The wetting agent can improve the wettability between the electroplating solution and the substrate, and the wettability of the electroplating solution on the cathode is sufficient to achieve rapid electrodeposition in cooperation with a high current, thereby improving the nucleation rate of the copper foil and reducing the grain size in the copper foil.

Herein, the term "brightener" refers to a substance that increases the smoothness of the plating layer and reduces the surface roughness. The brightener can make the grain size of the copper foil smaller, and reduce the surface roughness of the copper foil, thereby improving the surface smoothness.

In some embodiments, the leveling agent includes one or more of collagen and saccharin sodium. In some embodiments, the leveling agent includes collagen and saccharin sodium.

Without being restrained by any theory, the collagen can inhibit the deposition of the copper ions, thereby balancing the growth rate of the pits and the tips. The introduction of the saccharin sodium can attract the copper ions to be deposited in recesses on the surface of the copper foil, thereby reducing microscopic defects or nonuniformity inside the copper foil, and reducing warpage defects caused by the defects. The two different leveling agents help to further improve the pits and the protrusions on the surface of the copper foil, thereby improving the flatness of the copper foil.

In some embodiments, the concentration of the collagen in the electroplating solution is 60 mg/L to 300 mg/L. In some embodiments, the concentration of the collagen in the electroplating solution is 80 mg/L to 150 mg/L. In some embodiments, the concentration of the collagen in the electroplating solution is 60 mg/L, 80 mg/L, 100 mg/L, 150 mg/L, 200 mg/L, 250 mg/L, 300 mg/L, or in a range between any two of the above values or any value within the range.

The collagen may be selected from proteins with molecular weights commonly used in the field of copper foils, such as a collagen with a relative molecular weight of 8000 to 12,000.

In some embodiments, the concentration of the saccharin sodium in the electroplating solution is 0.5 g/L to 10 g/L. In some embodiments, the concentration of the saccharin sodium in the electroplating solution is 0.5 g/L to 4 g/L. In some embodiments, the concentration of the saccharin sodium in the electroplating solution is 0.5 g/L, 0.8 g/L, 1 g/L, 1.5 g/L, 2.0 g/L, 2.5 g/L, 3.0 g/L, 3.5 g/L, 4.0 g/L, 4.5 g/L, 5.0 g/L, 5.5 g/L, 6.0 g/L, 6.5 g/L, 7.0 g/L, 7.5 g/L, 8.0 g/L, 8.5 g/L, 9.0 g/L, 9.5 g/L, 10 g/L, or in a range between any two of the above values or any value within the range. In some embodiments, the wetting agent includes one or more of hydroxyethyl cellulose and polyethylene glycol. In some embodiments, the wetting agent includes hydroxyethyl cellulose and polyethylene glycol.

Without being restrained by any theory, the hydroxyethyl cellulose has good water solubility and thickening performance, can form a uniform solution in water, improves the viscosity of the electroplating solution, and adheres to the surface of the copper foil substrate. As a lubricant and wetting agent, the polyethylene glycol can reduce the surface tension of a liquid and enhance the wetting ability of the liquid on a solid surface. The combined use of the hydroxyethyl cellulose and the polyethylene glycol can improve the adhesion performance of the electroplating solution, improve and assist the adhesion and deposition of the copper ions on the surface of the substrate, improve the consistency of the grains in the deposition process, reduce the difference of the grain size in the thickness direction, and improve the uniformity of the copper foil, thereby improving the mechanical properties of the copper foil.

In some embodiments, the concentration of the polyethylene glycol in the electroplating solution is 50 mg/L to 200 mg/L. In some embodiments, the concentration of the polyethylene glycol in the electroplating solution is 60 mg/L to 150 mg/L. In some embodiments, the concentration of the polyethylene glycol in the electroplating solution is 50 mg/L, 60 mg/L, 70 mg/L, 80 mg/L, 100 mg/L, 150 mg/L, 200 mg/L, or in a range between any two of the above values or any value within the range.

The polyethylene glycol may be selected with molecular weights commonly used in the field of copper foils, such as polyethylene glycol with a relative molecular weight of 4000.

In some embodiments, the concentration of the hydroxyethyl cellulose in the electroplating solution is 30 mg/L to 200 mg/L. In some embodiments, the concentration of the hydroxyethyl cellulose in the electroplating solution is 50 mg/L to 150 mg/L. In some embodiments, the concentration of the hydroxyethyl cellulose in the electroplating solution is 30 mg/L, 40 mg/L, 50 mg/L, 60 mg/L, 70 mg/L, 80 mg/L, 90 mg/L, 100 mg/L, 120 mg/L, 140 mg/L, 160 mg/L, 180 mg/L, 200 mg/L, or in a range between any two of the above values or any value within the range.

The polyethylene glycol may be selected with molecular weights commonly used in the field of copper foils. In some embodiments, the relative molecular mass of the hydroxyethyl cellulose is 120,000.

In some embodiments, the mass ratio of the polyethylene glycol to the hydroxyethyl cellulose in the electroplating solution is (1-1.5):1. In some embodiments, the mass ratio of the polyethylene glycol to the hydroxyethyl cellulose in the electroplating solution is (1.2-1.5):1. As an example, the mass ratio of the polyethylene glycol to the hydroxyethyl cellulose is 1:1, 1.1:1, 1.2:1, 1.3:1, 1.4:1, 1.5:1, or in a range between any two of the above values or any value within the range.

In some embodiments, the brightener includes bis-(sodium sulfopropyl)-disulfide.

Without being restrained by any theory, the bis-(sodium sulfopropyl)-disulfide is adsorbed onto the copper surface of the cathode through a sulfhydryl functional group or a disulfide bond, and terminal sulfonate anions capture hydrated copper ions in the electroplating solution to destroy hydration thereof, and interact with chloride ions adsorbed on the cathode surface, so that electrons are transferred to the captured copper ions through the chloride ions, thereby greatly improving the electrochemical reduction rate of the copper ions, refining the grains, and realizing material strengthening.

In some embodiments, the concentration of the bis-(sodium sulfopropyl)-disulfide in the electroplating solution is 500 mg/L to 2000 mg/L. In some embodiments, the concentration of the bis-(sodium sulfopropyl)-disulfide in the electroplating solution is 500 mg/L to 1000 mg/L. In some embodiments, the concentration of the bis-(sodium sulfopropyl)-disulfide in the electroplating solution is 500 mg/L, 600 mg/L, 700 mg/L, 800 mg/L, 900 mg/L, 1000 mg/L, 1500 mg/L, 2000 mg/L, or in a range between any two of the above values or any value within the range.

In some embodiments, the electroplating solution includes chloride ions, and the concentration of the chloride ions (calculated as chlorine atoms) is 20 mg/L to 80 mg/L. In some embodiments, the concentration of the bis-(sodium sulfopropyl)-disulfide in the electroplating solution is 40 mg/L to 80 mg/L. In some embodiments, the concentration of the chloride ions (calculated as chlorine atoms) is 20 mg/L, 30 mg/L, 40 mg/L, 50 mg/L, 60 mg/L, 70 mg/L, 80 mg/L, or in a range between any two of the above values or any value within the range. The use of the chloride ions in cooperation with the wetting agent can further improve the electrodeposition process.

In some embodiments, the electroplating solution includes: collagen with a concentration of 60 mg/L to 300 mg/L, saccharin sodium with a concentration of 0.5 g/L to 10 g/L, polyethylene glycol with a concentration of 50 mg/L to 200 mg/L, hydroxyethyl cellulose with a concentration of 30 mg/L to 200 mg/L, bis-(sodium sulfopropyl)-disulfide with a concentration of 500 mg/L to 2000 mg/L, and chloride ions with a concentration of 20 mg/L to 80 mg/L.

In some embodiments, the electroplating solution includes: collagen with a concentration of 80 mg/L to 150 mg/L, saccharin sodium with a concentration of 0.5 g/L to 4 g/L, polyethylene glycol with a concentration of 60 mg/L to 150 mg/L, hydroxyethyl cellulose with a concentration of 50 mg/L to 150 mg/L, bis-(sodium sulfopropyl)-disulfide with a concentration of 500 mg/L to 1000 mg/L, and chloride ions with a concentration of 40 mg/L to 80 mg/L.

A copper source is also included in the electroplating solution to provide copper ions for the electroplating solution. Sulfuric acid is also included in the electroplating solution to provide an acidic environment for the reduction of the copper ions.

In some embodiments, the concentration of the copper ions (calculated as copper atoms) is 60 g/L to 100 g/L. In some embodiments, the concentration of the copper ions (calculated as copper atoms) is 80 g/L to 100 g/L. In some embodiments, the concentration of the copper ions (calculated as copper atoms) is 60 g/L, 70 g/L, 80 g/L, 90 g/L, 100 g/L, or in a range between any two of the above values or any value within the range.

In some embodiments, the concentration of the sulfuric acid is 60 g/L to 110 g/L. In some embodiments, the concentration of the sulfuric acid is 80 g/L to 110 g/L. In some embodiments, the concentration of the sulfuric acid is 60 g/L, 70 g/L, 80 g/L, 90 g/L, 100 g/L, 110 g/L, or in a range between any two of the above values or any value within the range.

In some embodiments, the pH value of the electroplating solution is 2.5 to 4.5, such as 2.5, 3.0, 3.5, 4.0, 4.5, or in a range between any two of the above values or any value within the range.

The synergistic effect of the electroplating solution and electroplating parameters helps to form the copper foil with a heterogeneous grain morphology with different particle sizes of the grains. The copper foil has excellent tensile strength and elongation at break, which helps to improve the safety performance of a high energy density or high expansion battery. Meanwhile, the preparation method can realize large-scale manufacturing and thus has the prospect of industrial application.

[Negative Electrode Plate]

As an example of the negative electrode plate, the negative electrode current collector has two surfaces opposite to each other in its own thickness direction, and the negative electrode film layer is disposed on any one or both of the two opposite surfaces of the negative electrode current collector.

In some embodiments, the negative electrode current collector may be the current collector in the first aspect of the present application, thereby providing a material foundation for improving the energy density of the secondary battery and helping to improve the safety of the secondary battery.

In some embodiments, other negative electrode active materials include, but are not limited to, one or more of conventional natural graphite, artificial graphite, soft carbon, hard carbon, a silicon-based material, a tin-based material, lithium titanate, and metallic lithium. The tin-based material may include one or more of elemental tin, an oxide of tin, and a tin alloy material.

In some embodiments, the negative electrode active material includes a silicon-based material, and the silicon-based material includes one or more of elemental silicon, a silicon oxide, a silicon-carbon composite, a silicon-nitrogen composite, and a silicon alloy material.

In some embodiments, based on the total mass of the negative electrode film layer, the mass content of the silicon-based material is 5% to 100%.

In some embodiments, based on the total mass of the negative electrode film layer, the mass content of the silicon-based material is 10% to 80%.

In some embodiments, based on the total mass of the negative electrode film layer, the mass content of the silicon-based material is 10% to 30%.

In some embodiments, based on the total mass of the negative electrode film layer, the mass content of the silicon-based material is optionally 5%, 10%, 15%, 20%, 25%, 30%, 35%, 40%, 45%, 50%, 55%, 60%, 65%, 70%, 75%, 80%, 85%, 90%, 95%, 100%, or in a numerical range between any two of the values.

In some embodiments, the mass proportion of the silicon element in the silicon-based material is 20% to 50%.

In some embodiments, the mass proportion of the silicon element in the silicon-based material is 20%, 25%, 30%, 35%, 40%, 45%, 50%, or in a numerical range between any two of the values.

In some embodiments, based on the total mass of the negative electrode film layer, the mass proportion of the silicon element is 4% to 10%.

In some embodiments, based on the total mass of the negative electrode film layer, the mass proportion of the silicon element is 4%, 5%, 6%, 7%, 8%, 9%, 10%, or in a numerical range between any two of the values.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode plate further includes a conductive agent. The conductive agent includes one or more of superconducting carbon, acetylene black, carbon black, Ketjen black, a carbon dot, a carbon nanotube, graphene, and a carbon nanofiber.

In some embodiments, the conductive agent includes carbon black. In some embodiments, the conductive agent includes a carbon nanotube. In some embodiments, the conductive agent includes carbon black and a carbon nanotube. The conductive agent has a wide range of sources and an excellent conductive performance, which is beneficial to controlling the preparation cost of the secondary battery and improving the conductive performance of the negative electrode plate.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Positive Electrode Plate]

The positive electrode plate includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), a lithium nickel cobalt aluminum oxide (such as $LiNi_{0.85}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Electrolyte]

The electrolyte conducts ions between the positive electrode plate and the negative electrode plate. The present application has no specific limitations on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high-temperature or low-temperature performance of the battery.

[Separator]

In some embodiments, the secondary battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

In some embodiments, the secondary battery includes a wound secondary battery, and the positive electrode plate, the negative electrode plate, and the separator are manufactured into an electrode assembly by a winding process.

In some embodiments, the secondary battery includes a stacked secondary battery, and the positive electrode plate, the negative electrode plate, and the separator are manufactured into an electrode assembly by a stacking process.

In addition, a secondary battery, a battery module, a battery pack, and an electric device in the present application will be described below with appropriate reference to the drawings.

In one embodiment of the present application, provided is a secondary battery.

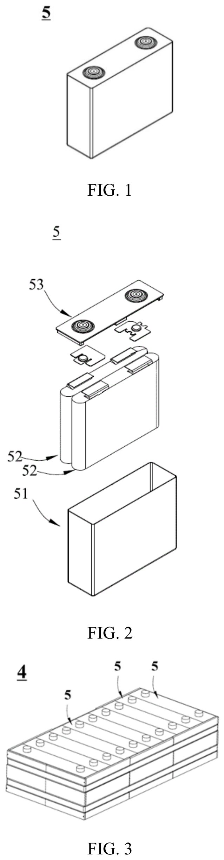

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

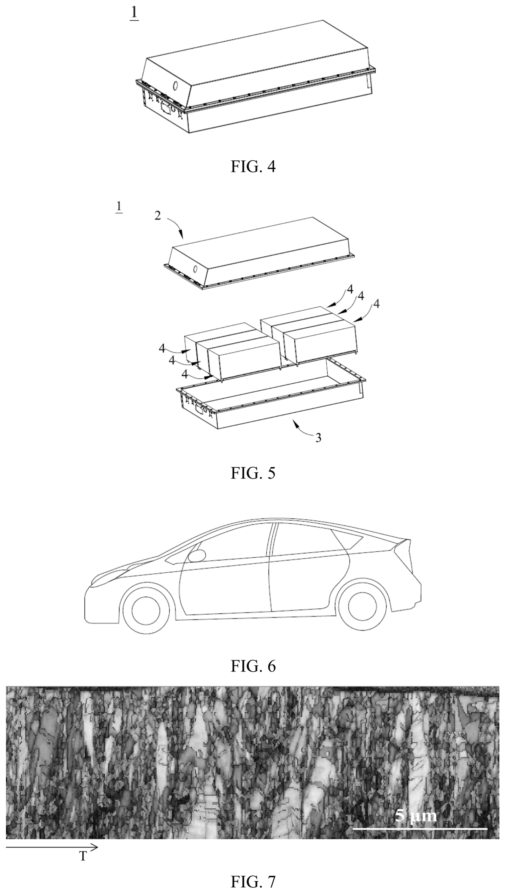

FIGs. 4 and 5 show a battery pack 1 as one example. Referring to FIGs. 4 and 5, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a secondary battery, a battery module, or a battery pack may be selected based on usage requirements thereof.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery may thus be used as a power source.

**Examples**

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

**1. Performance Testing**

(1) Grain Characteristic Test of Copper Foil

The electron backscatter diffraction (EBSD) was combined with the scanning electron microscope to observe the cross section of the copper foil, where the model of the EBSD is Oxford C-Nano+. The inverse pole figure map (the magnification of 3000) was obtained, the particle size of each grain was measured, the diameter of the equivalent circle of the grains was used as the particle size of the grains, statistical distribution analysis was performed on the particle size of the grains, and a skewed distribution was used for fitting to obtain the total number of the copper grains, the average particle size, the maximum particle size, the minimum particle size, the particle size span, the number proportion of the copper grains with the particle size of less than or equal to 0.5 $\mu$m, and the number proportion of the copper grains with the particle size of greater than 0.5 $\mu$m.

(2) Mechanical Property Test

According to the GB/T 5230-1995 "electrolytic copper foil", the copper foil prepared in the example was cut into tensile sample strips with a length L0 of 50 mm and a width of 15 mm. A universal testing machine was used to test the tensile performance at 25 °C, and the tensile rate was set to 50 mm/min.

Then the cross-sectional area of the tensile sample strip was $S_0 = \frac{m}{\rho \times L_0}$, where $\rho$ is 8.96 g/cm$^3$, m is expressed in g, and $L_0$ is expressed in cm.

The test sample was continuously loaded with a tension until it fractured, the maximum load F was read from the force dial or the tensile curve, and the tensile strength $\sigma_b$ was calculated according to Formula I.

$$\sigma_b = \frac{F}{S_0}$$

Formula I

The distance between two lines after the test sample fractured was $L_1$, which was measured on the test sample or read from the tensile curve. $L_1$ may be measured by a straight line method or a displacement method, and the elongation at break $\delta$ was calculated according to Formula II.

$$\delta = \frac{L_1 - L_0}{L_0}$$

Formula II

(3) Hardness Test

The copper foil sample was put into a metallographic hot mounting machine, and heated at a rate of 150 °C/10 min after wood glue powder was poured, a prismatic indenter of a Vickers hardness tester was pressed into the copper foil sample (50 g weight), lengths of two diagonal lines were optically measured, and the corresponding Vickers hardness was obtained according to the following Vickers hardness calculation formula.

$$HV = 0.102 \times \frac{2F \sin\frac{\alpha}{2}}{d^2}$$

HV represents Vickers hardness;
F represents the load of the indenter (Newton force);
$\alpha$ represents the included angle (136 degrees) between opposite surfaces of the indenter;
d represents the average value (mm) of the lengths of the diagonal lines.

(4) State of Health (SOH) Corresponding to Crack-Induced Failure

At 25°C, the battery was charged at a constant current of 1C to a voltage of 3.8 V, and then charged at a constant voltage of 3.8 V to a current $\leq 0.05C$, and subsequently, the battery was discharged at a constant current of 1C to a voltage of 2.5 V. This was one charging and discharging cycle. Such charging and discharging cycles were repeatedly performed. In this process, the SOH of the cell was monitored throughout the process, and then the cell was subjected to computerized tomography (CT) at an interval of 1% SOH to determine whether a crack was generated inside the battery. If a crack was generated, the battery that experienced crack-induced failure during the cycling process was disassembled to observe whether fractures occurred in the negative electrode plate of the battery, thereby obtaining the SOH corresponding to the crack-induced failure.

(5) Thickness Expansion Rate and Expansion Force Test of Secondary Battery under Crack-Induced Failure:

First, at 25 °C, the total thickness H0' of the secondary battery was measured, next the battery was charged at a constant current of 1C to a voltage of 3.8 V, and then charged at a constant voltage of 3.8 V to a current $\leq 0.05C$, and subsequently, the battery was discharged at a constant current of 1C to a voltage of 2.5 V. This was one charging and discharging cycle. Such charging and discharging cycles were repeatedly performed. In this process, the SOH of the cell was monitored throughout the process, and then the cell was subjected to CT at an interval of 1% SOH to determine whether a crack was generated inside the battery. If a crack was generated, the battery that experienced crack-induced failure during the cycling process was disassembled to observe whether fractures occurred in the negative electrode plate of the battery, thereby obtaining the SOH corresponding to the crack-induced failure. The total thickness H1' of the secondary battery at this time was measured, and the thickness expansion rate was calculated by the formula (H1' - H0')/H0'; and meanwhile, the expansion force at this time was measured by the pressure sensors disposed in the clamps on both sides of the large surface of the electrode plate of the secondary battery cell.

(6) Thickness Expansion Rate and Expansion Force Test of Secondary Battery at 60% SOH:

First, at 25°C, the total thickness of the secondary battery was measured, next the battery was charged at a constant current of 1C to a voltage of 3.8 V, and then charged at a constant voltage of 3.8 V to a current $\leq 0.05C$, and subsequently, the battery was discharged at a constant current of 1C to a voltage of 2.5 V. This was one charging and discharging cycle. Such charging and discharging cycles were repeatedly performed. In this process, the SOH of the cell was monitored throughout the process until the battery reached 60% SOH, and the expansion force at this time was measured by the pressure sensors disposed in the clamps on both sides of the large surface of the electrode plate of the secondary battery cell; the total thickness of the secondary battery at this time was measured, and the thickness expansion rate of the secondary battery at 60% SOH was obtained by using (the thickness at this time - the total thickness in the initial state)/the total thickness in the initial state.

**Preparation Method**

Example 1

(1) Preparation of Copper Foil

A copper plate or a copper wire having a purity of 99.9% or more was dissolved in sulfuric acid having a mass content of 98% to obtain a copper sulfate solution, which was used as a copper source, and an additive and hydrochloric acid were added at 55 °C to prepare an electroplating solution. The concentration of collagen (with a relative molecular mass of 8000 to 12,000) was 120 mg/L, the concentration of polyethylene glycol (with a relative molecular mass of 4000) was 80 mg/L, the concentration of hydroxyethyl cellulose (with a relative molecular mass of about 120,000) was 60 mg/L, the concentration of chloride ions was 40 mg/L, the concentration of bis-(sodium sulfopropyl)-disulfide was 600 mg/L, the concentration of saccharin sodium was 2 g/L, the concentration of copper ions (calculated as copper atoms) was 90 g/L, and the rest was deionized water. The pH value of the electroplating solution was 3.5.

A sinusoidal wave pulse current was used and periodically applied to a polished cathode titanium roller, and an anode electrode was a titanium substrate plate. The area of the titanium roller located in the electroplating solution was 8.67 $m^2$, and the rotation speed (rolling speed) of the titanium roller was 2.4 m/min. The sinusoidal wave pulse current was applied with a peak current of 55,000 A, a valley current of 2500 A, and a period of 3000 ms. The distance between the cathode and the anode was 10 mm, the copper foil was deposited on the titanium roller under a deposition temperature of 55 °C, and the thickness of the copper foil was 6 $\mu$m.

(2) Preparation of Battery

A positive electrode active material ($LiNi_{0.8}Co_{0.1}Mn_{0.1}O_2$ (NCM811)), a conductive agent acetylene black, and a binder polyvinylidene fluoride (PVDF) were dissolved according to a weight ratio of 90:5:5 in a solvent N-methylpyrrolidone (NMP), and thoroughly stirred and uniformly mixed to obtain a positive electrode slurry. Then, a positive electrode current collector was uniformly coated with the positive electrode slurry, and the coated positive electrode current collector was subjected to drying, cold pressing, and slitting to obtain a positive electrode plate.

A negative electrode active substance silicon-carbon (silicon content of 20 wt% to 50 wt%), artificial graphite, a conductive agent acetylene black, a binder styrene-butadiene rubber (SBR), and a thickener sodium carboxymethylcellulose (CMC-Na) were dissolved in a deionized water solvent at a weight ratio of 20:76:1:1.5:1.5, and uniformly mixed to prepare a negative electrode slurry. The negative electrode current collector copper foil was uniformly coated with the negative electrode slurry once or multiple times, and the coated negative electrode current collector copper foil was dried to obtain a negative electrode film, which was then subjected to cold pressing and slitting to obtain a negative electrode plate, where the specific capacity of a negative electrode active material in the negative electrode film layer was 800 mAg/h to 1500 mAg/h.

In an argon atmosphere glove box ($H_2O$ < 0.1 ppm, $O_2$ < 0.1 ppm), ethylene carbonate, diethyl carbonate, and dimethyl carbonate were mixed in a volume ratio of 1:1:1, and $LiPF_6$ was dissolved in the above solution to obtain an electrolytic solution. The concentration of $LiPF_6$ in the electrolytic solution was 1 mol/L. Then, 2.0 wt% of fluoroethylene carbonate, 0.5 wt% of 1,3-propanesultone, and 0.5 wt% of succinic anhydride were added as additives to the above organic solvent, and mixed and stirred uniformly to obtain the electrolytic solution.

A polypropylene film was used as the separator.

The positive electrode plate, the separator, and the negative electrode plate were stacked in sequence, with the separator placed between the positive and negative electrode plates to fulfill the function of separation. The stack was then wound to obtain an electrode assembly, and the electrode assembly was placed in a battery housing. After drying, the electrolytic solution was injected, and then a lithium-ion battery was obtained through processes such as formation and standing.

**Examples 2-3**

The preparation methods of Examples 2-3 are substantially the same as those of Example 1, except that components of the electroplating solution (see Table 1) and parameters of the sinusoidal wave pulse current (see Table 2) were adjusted; the thickness of the deposited copper foil was 6 $\mu$m.

**Comparative Examples 1-2**

The preparation method of Comparative Example 1 is substantially the same as that of Example 1, except that a direct current was used for deposition, and the deposition current was 55,000 A. The thickness of the copper foil was 6 μm.

The preparation method of Comparative Example 2 is substantially the same as that of Example 1, except that a direct current deposition current of 30,000 A was used. The thickness of the copper foil was 6 μm.

Table 1: Components of the electroplating solution

| Groups | Leveling agent | | Wetting agent | | Brightener | Chloride ion (mg/L) | Copper ion (g/L) | pH |
| | Collagen (mg/L) | Saccharin sodium (g/L) | Polyethylene glycol (mg/L) | Hydroxyethyl cellulose (mg/L) | Bis-(sodium sulfopropyl)-disulfide (mg/L) | | | |
|---|---|---|---|---|---|---|---|---|
| Example 1 | 120 | 2 | 80 | 60 | 600 | 40 | 90 | 3.5 |
| Example 2 | 120 | 2 | 120 | 100 | 600 | 60 | 90 | 3.5 |
| Example 3 | 120 | 2 | 120 | 100 | 600 | 60 | 90 | 3.5 |
| Comparative Example 1 | 120 | 2 | 80 | 60 | 600 | 40 | 90 | 3.5 |
| Comparative Example 2 | 120 | 2 | 80 | 60 | 600 | 40 | 90 | 3.5 |

Table 2: Parameters of the sinusoidal wave pulse current

| Groups | Peak current (A) | Valley current (A) | Period (ms) |
|---|---|---|---|
| Example 1 | 55000 | 2500 | 3000 |
| Example 2 | 65000 | 2500 | 3000 |
| Example 3 | 65000 | 5000 | 3000 |
| Comparative Example 1 | 55000 | NA | NA |
| Comparative Example 2 | 30000 | NA | NA |
| NA means not applicable. | | | |

The grain characteristics and mechanical characteristics of the copper foils prepared in Examples 1-3 and Comparative Examples 1-2 were tested, and the results of the secondary battery are shown in Table 3 below.

Table 3

| Item \ Serial number | Example 1 | Example 2 | Example 3 | Comparative Example 1 | Comparative Example 2 |
|---|---|---|---|---|---|
| Total number of the grains | 1359 | 1014 | 1537 | / | 214 |
| Average particle size (μm) | 0.3 | 0.3 | 0.4 | / | 0.7 |
| Maximum particle size (μm) | 1.5 | 1.6 | 1.8 | / | 3.7 |
| Minimum particle size (μm) | 0.2 | 0.2 | 0.3 | / | 0.2 |
| Particle size span (μm) | 1.3 | 1.4 | 1.5 | / | 3.5 |
| Number proportion % of the grains ($\leq 0.5$ μm) | 89.4 | 92.8 | 81.3 | / | 49.5 |
| Number proportion % of the grains | 10.6 | 7.2 | 18.7 | / | 50.5 |
| (> 0.5 μm) | | | | | |
| Tensile strength (MPa) | 723 | 746 | 764 | 701 | 335 |
| Elongation at break (%) | 5.2 | 5.8 | 5.8 | 2.7 | 5.3 |
| Hardness (HV) | 56 | 58 | 59 | 66 | 52 |
| SOH (%) of the secondary battery corresponding to the crack-induced failure | 53 | 49 | 46 | 69 | 81 |
| Thickness expansion rate of the secondary battery at 60% SOH | 8.1% | 8.0% | 7.8% | / | / |
| Expansion force (kgf) of the secondary battery at 60% SOH | 7123 | 7042 | 6988 | / | / |
| Thickness expansion rate (%) of the secondary battery at the crack-induced failure | 9.2% | 10.1% | 10.5% | 6.2% | 4.1% |
| Expansion force (kgf) of the secondary battery at the crack-induced failure | 8123 | 8892 | 9412 | 5673 | 3654 |

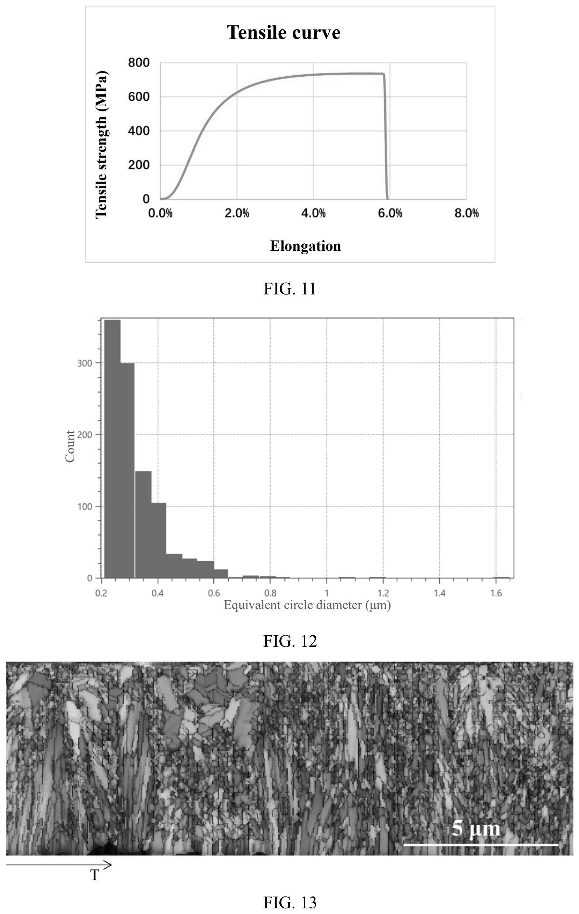

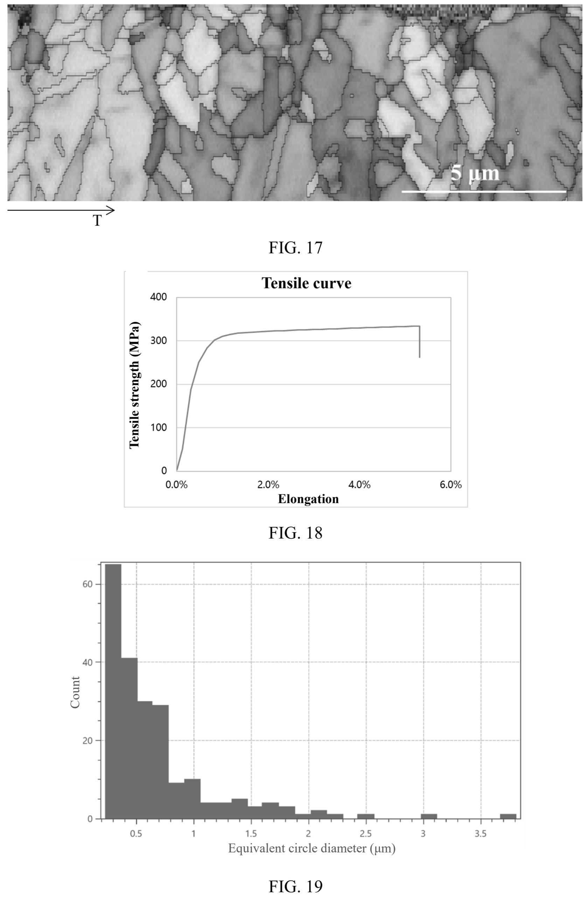

FIGs. 7, 10, and 13 respectively show the inverse pole figure maps of the cross sections of the copper foils of Examples 1-3 after EBSD testing, where T is the thickness direction of the current collector, and the cross section of the copper foil exhibits a heterogeneous grain structure with a doped distribution of large and small grains. Compared with the inverse pole figure map of the copper foil of Comparative Example 2 (FIG. 17), it can be seen that more fine grains are distributed in the copper foil of Examples 1-3, and the particle sizes of the grains are smaller as a whole.

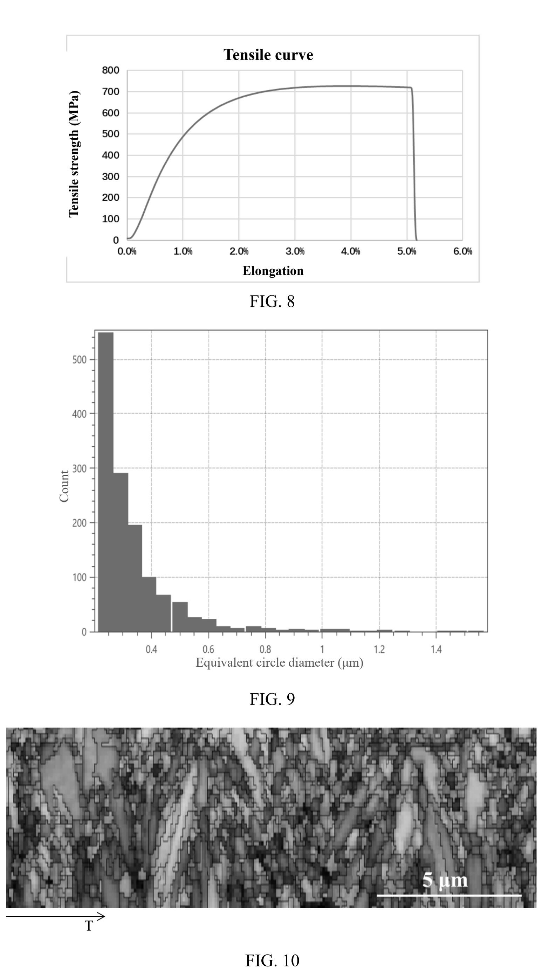

FIGs. 9, 12, 15, and 19 respectively show particle size distribution graphs of the copper foils of Examples 1-3 and Comparative Example 2. With reference to Table 3, it can be seen that in the copper foils of Examples 1-3, the number proportion of the copper grains with the particle size of less than or equal to 0.5 $\mu$m is between 70% and 95%, and is concentrated in a range of 80% to 95%, while in Comparative Example 2, the number proportion of the copper grains with the particle size of less than or equal to 0.5 $\mu$m is less than 50%, indicating that the copper grains of Examples 1-3 are finer as a whole, and the copper foil has higher mechanical strength. In addition, in the copper foils of Examples 1-3, the number proportion of the copper grains with the particle size of greater than 0.5 $\mu$m is in a range of 5% to 30%, while in Comparative Example 2, the number proportion of the copper grains with the particle size of greater than 0.5 $\mu$m is 50.5%. The copper foils of Examples 1-3 have plasticity substantially equivalent to that of the copper foil of Comparative Example 2. This indicates that the preparation of the copper foil by the sinusoidal wave pulse current helps to adjust the particle size distribution of the copper grains, thereby improving the mechanical properties and plasticity of the copper foil.

In the copper foils of Examples 1-3, the average particle size is in a range of 0.3 $\mu$m to 0.6 $\mu$m, the maximum particle size is in a range of 1 $\mu$m to 2 $\mu$m, the minimum particle size is in a range of 0.1 $\mu$m to 0.3 $\mu$m, and the particle size span is 0.8 $\mu$m to 2 $\mu$m. In Comparative Example 2, the particle size span of the copper grains is larger, and the average particle size of the copper crystals is larger. It can be understood that the copper foils of Examples 1-3 have higher cumulative density on the crystal interface and high mechanical strength; the copper foil of Comparative Example 2 has lower cumulative density on the crystal interface and relatively low mechanical strength. This also corresponds to the tensile strength of Examples 1-3 and Comparative Example 2.

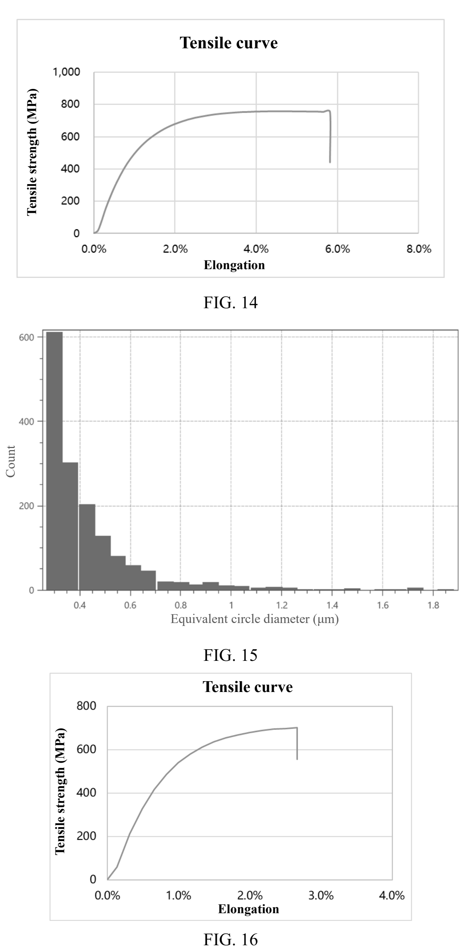

FIGs. 8, 11, and 14 respectively show tensile curves of the copper foils of Examples 1-3. It can be seen that the tensile strength of the prepared copper foils is in a range of 600 MPa to 1000 MPa, and the elongation at break of the copper foils is in a range of 4% to 8% (Table 3), indicating that the copper foils have excellent strength and plasticity. FIG. 16 shows a tensile curve of the copper foil of Comparative Example 1. The tensile strength of the copper foil is similar to that of Example 1, but the elongation at break is only 2.7%, indicating poor plasticity. FIG. 18 shows a tensile curve of the copper foil of Comparative Example 1, and the copper foil has an elongation at break similar to that of Example 1, but has poor tensile strength.

The hardness of the copper foils of Examples 1-3 is in a range of 55 HV to 65 HV, indicating that the copper foils have good compression deformation or puncture resistance.

In Comparative Example 1, the copper foil was prepared by using a direct current with the peak current same as that in Example 1. It can be seen from comparison with Example 1 that the copper foil of Comparative Example 1 has similar tensile strength and hardness to the copper foil of Example 1, but the elongation at break is significantly lower than that of Example 1. This indicates that the particle size distribution of the copper grains can be adjusted by the sinusoidal wave pulse current and the current parameters, so that the copper foil has excellent plasticity on the premise of good mechanical strength.

Compared with Comparative Examples 1-2, the crack-induced failure of Examples 1-3 corresponds to a significant decrease in the SOH, which indicates that the copper foils prepared in Examples 1-3 significantly improve the service life of the secondary battery, thereby improving the safety of the secondary battery. Although the copper foil in Comparative Example 2 has an excellent elongation at break, the tensile strength is low, resulting in a relatively high SOH value corresponding to the crack-induced failure. In contrast, in Examples 1-3, the tensile strength of the copper foil prepared by using the sinusoidal wave pulse current with varying amplitudes of the current is significantly improved, with good plasticity maintained, the SOH value corresponding to the crack-induced failure is significantly reduced, and the service life of the cell can be improved by more than 25% SOH.

Compared with Comparative Examples 1-2, the copper foils of Examples 1-3 have good mechanical properties and plasticity, and can effectively reduce the probability of cracking or breakage of the current collector caused by the expansion of the secondary battery. For a secondary battery with a high expansion property and an expansion force of greater than or equal to 1000 kgf and a thickness expansion rate of 4% to 10%, the copper foils of Examples 1-3 can effectively reduce the probability of crack-induced breakage of the current collector, so that the SOH of the secondary battery at the crack-induced failure is reduced (that is, the cycle service life and safety of the secondary battery are effectively improved), and the probability of failure and performance plummet of the secondary battery caused by the expansion of the battery is reduced.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A secondary battery, comprising a copper foil, wherein the copper foil comprises copper grains with different particle sizes, and the copper grains comprise copper grains with a particle size of less than or equal to 0.5 $\mu$m and copper grains with a particle size of greater than 0.5 $\mu$m, wherein a number proportion of the copper grains with the particle size of less than or equal to 0.5 $\mu$m in a total number of the copper grains is 70% to 95%, and a number proportion of the copper grains with the particle size of greater than 0.5 $\mu$m in the total number of the copper grains is 5% to 30%.

2. The secondary battery according to claim 1, wherein a particle size range of the copper grains with the particle size of greater than 0.5 $\mu$m is greater than 0.5 $\mu$m and less than or equal to 3 $\mu$m.

3. The secondary battery according to claim 1 or 2, wherein the number proportion of the copper grains with the particle size of less than or equal to 0.5 $\mu$m in the total number of the copper grains is 80% to 95%, and/or the number proportion of the copper grains with the particle size of greater than 0.5 $\mu$m in the total number of the copper grains is 5% to 20%.

4. The secondary battery according to any one of claims 1 to 3, wherein the copper foil satisfies at least one of the following conditions:

   (1) an average particle size of the copper grains is 0.3 $\mu$m to 1.2 $\mu$m;
   (2) a maximum particle size of the copper grains is 1 $\mu$m to 2.5 $\mu$m;
   (3) a minimum particle size of the copper grains is 0.1 $\mu$m to 0.3 $\mu$m; and
   (4) a particle size span of the copper grains is 0.8 $\mu$m to 2.5 $\mu$m.

5. The secondary battery according to any one of claims 1 to 4, wherein the copper foil satisfies at least one of the following conditions:

   (1) an average particle size of the copper grains is 0.3 $\mu$m to 0.6 $\mu$m;
   (2) a maximum particle size of the copper grains is 1.2 $\mu$m to 2.0 $\mu$m;
   (3) a minimum particle size of the copper grains is 0.1 $\mu$m to 0.3 $\mu$m; and
   (4) a particle size span of the copper grains is 1 $\mu$m to 2 $\mu$m.

6. The secondary battery according to any one of claims 1 to 5, wherein tensile strength of the copper foil is 600 MPa to 1000 MPa, and/or elongation at break of the copper foil is 4% to 8% under test conditions of room temperature (20$\pm$10 °C), a sample length $\times$ width of (50$\pm$0.25 mm) $\times$ (15$\pm$0.25 mm), and a tensile speed of 50$\pm$0.5 mm/min.

7. The secondary battery according to any one of claims 1 to 6, wherein the tensile strength of the copper foil is 700 MPa to 1000 MPa, and/or the elongation at break of the copper foil is 4% to 7% under the test conditions of the room temperature (20$\pm$10 °C), the sample length $\times$ width of (50$\pm$0.25 mm) $\times$ (15$\pm$0.25 mm), and the tensile speed of 50 $\pm$0.5 mm/min.

8. The secondary battery according to any one of claims 1 to 7, wherein the tensile strength of the copper foil is 700 MPa to 800 MPa, and/or the elongation at break of the copper foil is 5% to 6% under the test conditions of the room temperature (20$\pm$10 °C), the sample length $\times$ width of (50$\pm$0.25 mm) $\times$ (15$\pm$0.25 mm), and the tensile speed of 50 $\pm$0.5 mm/min.

9. The secondary battery according to any one of claims 1 to 8, wherein hardness of the copper foil is 55 HV to 65 HV.

10. The secondary battery according to any one of claims 1 to 9, wherein hardness of the copper foil is 55 HV to 60 HV.

11. The secondary battery according to any one of claims 1 to 10, wherein a thickness of the copper foil is 4 $\mu$m to 10 $\mu$m.

12. The secondary battery according to any one of claims 1 to 11, wherein the secondary battery further comprises a negative electrode film layer located on at least one side of the copper foil, and a negative electrode active material in the negative electrode film layer comprises at least one of artificial graphite, natural graphite, soft carbon, hard carbon, a silicon-based material, a tin-based material, and lithium titanate.

13. The secondary battery according to claim 12, wherein the negative electrode active material comprises a silicon-based material, and the silicon-based material comprises at least one of elemental silicon, a silicon-oxygen compound, a silicon-carbon composite, a silicon-nitrogen composite, and a silicon alloy.

14. A preparation method for a secondary battery, comprising: preparing a copper foil by an electroplating method, wherein the electroplating method comprises applying a periodic pulse current to an electroplating solution, so that copper ions in the electroplating solution are reduced and deposited to form the copper foil; a peak value of the pulse current is 40,000 A to 100,000 A, a valley value of the pulse current is 100 A to 20,000 A, and a change period of the current is 50 ms to 5000 ms.

15. The preparation method according to claim 14, wherein the electroplating method satisfies one or more of the following conditions:

    (1) the peak value of the pulse current is 40,000 A to 80,000 A;
    (2) the valley value of the pulse current is 1000 A to 10,000 A;
    (3) the change period of the pulse current is 500 ms to 5000 ms;
    (4) a distance between a cathode electrode and an anode electrode is 8 mm to 20 mm;
    (5) a temperature of electroplating deposition is 45 °C to 60 °C; and
    (6) a rolling speed of a cathode roller is 2 m/min to 5 m/min.

16. The preparation method according to claim 14 or 15, wherein the electroplating method satisfies one or more of the following conditions:

    (1) the peak value of the pulse current is 50,000 A to 70,000A;
    (2) the valley value of the pulse current is 2000 A to 5500 A;
    (3) the change period of the pulse current is 2000 ms to 4000 ms;
    (4) a distance between a cathode electrode and an anode electrode is 8 mm to 12mm;
    (5) a temperature of electroplating deposition is 50 °C to 60 °C; and
    (6) a rolling speed of a cathode roller is 2 m/min to 3 m/min.

17. The preparation method according to any one of claims 14 to 16, wherein the pulse current comprises one or more of a square wave pulse current, a sinusoidal wave pulse current, a triangular wave pulse current, and a sawtooth wave pulse current, and optionally, the pulse current comprises a sinusoidal wave pulse current.

18. The preparation method according to any one of claims 14 to 17, wherein the electroplating solution comprises a leveling agent, a wetting agent, and a brightener,

    the leveling agent comprises one or more of collagen and saccharin sodium;
    the wetting agent comprises one or more of hydroxyethyl cellulose and polyethylene glycol; and
    the brightener comprises bis-(sodium sulfopropyl)-disulfide.

19. The preparation method according to claim 18, wherein the electroplating solution comprises: collagen with a concentration of 60 mg/L to 300 mg/L, saccharin sodium with a concentration of 0.5 g/L to 10 g/L, polyethylene glycol with a concentration of 50 mg/L to 200 mg/L, hydroxyethyl cellulose with a concentration of 30 mg/L to 200 mg/L, bis-(sodium sulfopropyl)-disulfide with a concentration of 500 mg/L to 2000 mg/L, and chloride ions with a concentration of 20 mg/L to 80 mg/L (calculated as chlorine atoms).

20. The preparation method according to claim 18 or 19, wherein the electroplating solution comprises: collagen with a concentration of 80 mg/L to 150 mg/L, saccharin sodium with a concentration of 0.5 g/L to 4 g/L, polyethylene glycol with a concentration of 60 mg/L to 150 mg/L, hydroxyethyl cellulose with a concentration of 50 mg/L to 150 mg/L, bis-(sodium sulfopropyl)-disulfide with a concentration of 500 mg/L to 1000 mg/L, and chloride ions with a concentration of 40 mg/L to 80 mg/L.

21. The preparation method according to any one of claims 14 to 20, wherein a pH value of the electroplating solution is 2.5 to 4.5.

22. An electric device, comprising the secondary battery according to claims 1 to 13 or the secondary battery prepared by the preparation method according to claims 14 to 21.

5

FIG. 1

5

FIG. 2

4

FIG. 3

FIG. 4

FIG. 5

FIG. 6

FIG. 7

FIG. 8

FIG. 9

FIG. 10

FIG. 11

FIG. 12

FIG. 13

**Tensile curve**

FIG. 14

FIG. 15

**Tensile curve**

FIG. 16

FIG. 17

FIG. 18

FIG. 19

## INTERNATIONAL SEARCH REPORT

| International application No. |
|---|
| **PCT/CN2025/115989** |

| A. | CLASSIFICATION OF SUBJECT MATTER |
|---|---|

H01M4/64(2006.01)i; H01M4/66(2006.01)i; C25D1/04(2006.01)i; C25D7/06(2006.01)i; H01M10/058(2010.01)i; H01M10/00(2006.01)n

According to International Patent Classification (IPC) or to both national classification and IPC

| B. | FIELDS SEARCHED |
|---|---|

Minimum documentation searched (classification system followed by classification symbols)

IPC: H01M; C25D

Documentation searched other than minimum documentation to the extent that such documents are included in the fields searched

Electronic data base consulted during the international search (name of data base and, where practicable, search terms used)

CNABS, CNTXT, CNKI, VEN, ENTXT, IEEE: 电池, 集流体, 集电体, 集流器, 集电器, 铜箔, 粒径, 颗粒, 晶粒, 直径, 电镀, 脉冲, 周期, battery, current, collector, copper, foil, particle, size, grain, diameter, electroplate, pulse, period

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119852540 A (CONTEMPORARY AMPEREX TECHNOLOGY CO., LTD.) 18 April 2025 (2025-04-18)<br>claims 1-22, and description, paragraphs 0005-0056 | 1-22 |
| X | TW 201303083 A1 (JX NIPPON MINING & METALS CORP.) 16 January 2013 (2013-01-16)<br>description, page 4, line 12 to page 24, line 1, and figures 1-2 | 1-13, 22 |
| X | CN 112004964 A (FURUKAWA ELECTRIC CO., LTD.) 27 November 2020 (2020-11-27)<br>description, paragraphs 0022-0118, and figures 1-2 | 14-22 |
| X | CN 118186525 A (UNIVERSITY OF ELECTRONIC SCIENCE AND TECHNOLOGY OF CHINA et al.) 14 June 2024 (2024-06-14)<br>description, paragraphs 0010-0073, and figures 1-4 | 14-22 |
| A | CN 111418105 A (NEC CORP.) 14 July 2020 (2020-07-14)<br>entire document | 1-22 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2025** | **07 November 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/115989**

| Patent document cited in search report | | | Publication date (day/month/year) | Patent family member(s) | | | Publication date (day/month/year) |
|---|---|---|---|---|---|---|---|
| CN | 119852540 | A | 18 April 2025 | None | | | |
| TW | 201303083 | A1 | 16 January 2013 | PH | 12014500086 | A1 | 17 February 2014 |
| | | | | KR | 20160023927 | A | 03 March 2016 |
| | | | | KR | 102048116 | B1 | 22 November 2019 |
| | | | | JPWO | 2013008349 | A1 | 23 February 2015 |
| | | | | JP | 5822928 | B2 | 25 November 2015 |
| | | | | WO | 2013008349 | A1 | 17 January 2013 |
| | | | | TWI | 540227 | B | 01 July 2016 |
| | | | | KR | 20140035524 | A | 21 March 2014 |
| | | | | PH | 12014500086 | B1 | 31 March 2017 |
| CN | 112004964 | A | 27 November 2020 | JP | 6606317 | B1 | 13 November 2019 |
| | | | | JPWO | 2019208368 | A1 | 07 May 2020 |
| | | | | KR | 20210002455 | A | 08 January 2021 |
| | | | | KR | 102479331 | B1 | 19 December 2022 |
| | | | | WO | 2019208368 | A1 | 31 October 2019 |
| | | | | TW | 202001000 | A | 01 January 2020 |
| | | | | TW | 734976 | B1 | 01 August 2021 |
| | | | | CN | 112004964 | B | 18 March 2022 |
| CN | 118186525 | A | 14 June 2024 | None | | | |
| CN | 111418105 | A | 14 July 2020 | US | 2021057721 | A1 | 25 February 2021 |
| | | | | JPWO | 2019107242 | A1 | 19 November 2020 |
| | | | | JP | 6943292 | B2 | 29 September 2021 |
| | | | | WO | 2019107242 | A1 | 06 June 2019 |
| | | | | CN | 111418105 | B | 10 October 2023 |

Form PCT/ISA/210 (patent family annex) (July 2022)

**REFERENCES CITED IN THE DESCRIPTION**

**Patent documents cited in the description**

- CN 202411154807

- GB T52301995 A